(19)

(11) **EP 3 464 497 B1**

(12) **EUROPÄISCHE PATENTSCHRIFT**

(45) Veröffentlichungstag und Bekanntmachung des Hinweises auf die Patenterteilung:
**25.05.2022 Patentblatt 2022/21**

(21) Anmeldenummer: **17706433.4**

(22) Anmeldetag: **16.02.2017**

(51) Internationale Patentklassifikation (IPC):
***C09J 7/22*** *(2018.01)* ***C09J 7/38*** *(2018.01)*

(52) Gemeinsame Patentklassifikation (CPC):
**C09J 7/22; C09J 7/385;** C09J 2301/124; C09J 2301/312; C09J 2301/412; C09J 2400/24; C09J 2467/006

(86) Internationale Anmeldenummer:
**PCT/EP2017/053553**

(87) Internationale Veröffentlichungsnummer:
**WO 2017/207119 (07.12.2017 Gazette 2017/49)**

(54) **HAFTKLEBESTREIFEN**

PRESSURE-SENSITIVE ADHESIVE STRIP

BANDE AUTOADHÉSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2016 DE 102016209707**

(43) Veröffentlichungstag der Anmeldung:
**10.04.2019 Patentblatt 2019/15**

(73) Patentinhaber: **TESA SE**
**22848 Norderstedt (DE)**

(72) Erfinder:
- **BURMEISTER, Axel**
  **22527 Hamburg (DE)**
- **HOSER, Mathias**
  **22529 Hamburg (DE)**
- **RADEMACHER, Franciska**
  **22523 Hamburg (DE)**

(74) Vertreter: **tesa SE**
**Hugo-Kirchberg-Straße 1**
**22848 Norderstedt (DE)**

(56) Entgegenhaltungen:
**WO-A1-2015/014582 DE-A1-102008 004 388**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 464 497 B1

## Beschreibung

Die Erfindung betrifft einen Haftklebestreifen.

Klebebänder werden häufig für die Verklebung von Kleinstbauteilen beispielsweise in Geräten in der Consumer-Elektronik-Industrie verwendet. Um dies zu ermöglichen, ist es erforderlich, dass die Form des Klebebandabschnittes der Form des Bauteils angepasst ist. Hierbei sind oft auch schwierige Geometrien nötig, welche durch Stanzen des Klebebandes erhalten werden. So sind Stegbreiten bei Stanzteilen von wenigen Millimetern keine Seltenheit. Bei der Applikation dieser empfindlichen Klebebänder auf die Bauteile kommt es häufig zur Verformung der Stanzteile.

Um die Verformung zu unterdrücken oder zumindest zu reduzieren, hat es sich als vorteilhaft herausgestellt, in die Klebebänder als mittlere Lage eine Folie, zum Beispiel eine PET-Folie, zu integrieren, um die Zugkräfte bei der Applikation aufzufangen.

Verklebungen mit solchen Klebebändern werden zunehmend auch verwendet, wenn das Bauteil Schockbelastungen ausgesetzt ist. Als besonders schockbeständig haben sich Verklebungen mit Haftklebestreifen herausgestellt, welche einen viskoelastischen, syntaktisch geschäumten Kern, eine stabilisierende Folie und auf den Außenlagen zwei selbstklebende Klebeschichten aufweisen.

Diese Haftklebestreifen sind derart leistungsfähig, dass unter Schockbelastung ein kohäsiver Bruch innerhalb des Haftklebestreifens zu beobachten ist. Die Verbindung zwischen dem geschäumten Kern und der stabilisierenden Folie versagt, und Schaum und Folie lösen sich voneinander.

Geschäumte Haftklebemassensysteme sind seit längerem bekannt und im Stand der Technik beschrieben.

Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet.

Bei einem syntaktischen Schaum sind Hohlkugeln wie Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für selbstklebende Schäume kombiniert werden.

Zu den Geräten in der Consumer-Elektronik-Industrie zählen elektronische, optische und feinmechanische Geräte im Sinne dieser Anmeldung insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge- , Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und -wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte

- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht heute zunehmend durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkerer Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da der erfindungsgemäß eingesetzte Haftklebestreifen hier aufgrund der unerwartet guten Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für zum Beispiel CD, DVD, Bluray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die eine hohe Halteleistung besitzen.

Des Weiteren ist wichtig, dass die Klebebänder in ihrer Halteleistung nicht versagen, wenn das elektronische Gerät, zum Beispiel ein Handy, fallengelassen wird und auf den Untergrund aufprallt. Der Klebestreifen muss also eine sehr hohe Schockresistenz aufweisen.

Die noch unveröffentlichte Patentanmeldung DE 10 2016 202 479 desselben Anmelders wie dieser Schrift beschreibt ein vierschichtiges Klebeband, bei dem eine geschäumte innenliegende Schicht zusätzlich durch eine PET-Stabilisierungsfolie verstärkt wird. Durch einen solchen Aufbau konnten besonders schockresistente Klebebänder angeboten werden.

Aufgabe der Erfindung gegenüber dem vorveröffentlichten Stand der Technik ist es, einen Haftklebestreifen zu finden, der eine besonders hohe Schockresistenz insbesondere in der z-Ebene (also insbesondere bezüglich mechanischer Einwirkung senkrecht auf die Verklebungsebene) aufweist. Zudem war es gewünscht, bezogen auf den in der Schrift DE 10 2016 202 479 beschriebenen Gegenstand einen günstigeren und einfacheren Klebebandaufbau anbieten zu können, ohne große Einbußen in den positiven Eigenschaften der Schockresistenz hinnehmen zu müssen.

Die Aufgabe wird mit einem gattungsgemäßen Haftklebestreifen erfindungsgemäß gelöst, wie er im Hauptanspruch niedergelegt ist. Gegenstand der Unteransprüche sind dabei vorteilhafte Weiterbildungen des Haftklebstreifens.

Demgemäß betrifft die Erfindung einen Haftklebestreifen aus genau drei Schichten, umfassend

- eine innenliegende Schicht F aus einem Folienträger,
- eine Schicht SK1 aus einer selbstklebenden Masse, die auf der Oberseite der Schicht B angeordnet ist und die auf einer geschäumten selbstklebenden Acrylatmasse basiert,
- eine Schicht SK2 aus einer selbstklebenden Masse, die auf der der Schicht SK1 gegenüberliegenden Seite der Schicht F angeordnet ist und die ebenfalls auf einer geschäumten selbstklebenden Acrylatmasse basiert und zur Schäumung der Polymermatrix der Selbstklebemassenschichten SK1 und SK2 Mikroballons verwendet werden und der Anteil der Mikroballons beider Selbstklebemassenschichten SK1 und SK2 (bezogen auf die nicht expandierten Mikroballons) zwischen 0.5 und 3 Gew.-% liegt, jeweils bezogen auf die Gesamtzusammensetzung der entsprechenden Schicht SK1 beziehungsweise SK2.

Vorzugsweise ist der Folienträger nichtdehnbar.

Die innenliegende Schicht F aus einem Folienträger wird im Rahmen dieser Schrift synonym auch einfach als Folienträger, Folienschicht oder als Folienträgerschicht bezeichnet.

Die Schichten SK1 und SK2 aus selbstklebender Masse werden im Rahmen dieser Schrift auch als Selbstklebemassenschichten SK1 und SK2, einfach als Schichten SK1 und SK2 oder auch als außenliegende Schichten, Klebemassen-, Selbstklebemassen- oder Haftklebemassenschichten SK1 und SK2 bezeichnet. Der Begriff "außenliegend" bezieht sich dabei auf den dreischichtigen Aufbau des Haftklebestreifens, unbeschadet eventuell vorgesehener Liner auf den Außenflächen der Selbstklebemassenschichten (siehe weiter unten).

In vorteilhafter Vorgehensweise sind eine oder beide Oberflächen der Folienschicht F physikalisch und/oder chemisch vorbehandelt sind. Eine solche Vorbehandlung kann beispielweise durch Ätzung und/oder Coronabehandlung und/oder Plasmavorbahndlung und/oder Primerung erfolgen. Sofern beide Oberflächen der Folienschicht vorbehandelt sind, kann die Vorbehandlung jeder Oberfläche unterschiedlich erfolgen oder insbesondere können beide Oberflächen gleich vorbehandelt sein.

In einer besonders bevorzugten Ausführungsvariante der Erfindung handelt es sich um einen in Bezug auf die Zusammensetzung der Schichten symmetrisch aufgebauten Haftklebestreifen, indem die geschäumten selbstklebenden Acrylatmassen der beiden außenliegenden Schichten SK1 und SK2 chemisch identisch sind und vorteilhaft auch sofern ihnen Additive zugesetzt sind, diese identisch sind und in identischer Menge eingesetzt sind..

Erfindungsgemäß ist auch ein Haftklebestreifen realisierbar, das in z-Richtung strukturell symmetrisch aufgebaut ist, bei dem aber die außenliegenden Selbstklebemassenschichten SK1 und SK2 zwar gleich dick sind und/oder dieselbe Dichte aufweisen, aber - als jeweils geschäumte selbstklebende Acrylatmassenschichten - chemisch unterschiedlich sind.

In sehr vorteilhafter Vorgehensweise ist der Haftklebestreifen vollkommen symmetrisch aufgebaut, das heißt sowohl bezüglich der chemischen Zusammensetzung der beiden geschäumten selbstklebende Acrylatmassenschichten SK1 und SK2 (einschließlich deren gegebenenfalls vorliegenden Additivierungen), als auch bezüglich seines strukturellen Aufbaus, indem beide Oberflächen des - insbesondere nichtdehnbaren - Folienträgers F identisch vorbehandelt sind und die beiden außenliegenden Selbstklebemassenschichten SK1 und SK2 dieselbe Dicke und Dichte aufweisen. "Vollkommen symmetrisch" bezieht sich dabei insbesondere auf die z-Richtung ("Dicke", Richtung senkrecht auf die Haftklebstreifenebene) des Haftklebestreifens, kann sich aber darüber hinaus natürlich auch auf die Geometrie in der Flächenebene (x- und y-Richtungen, also Länge und Breite, des Haftklebestreifens) beziehen.

Die nachfolgenden Ausführungen beziehen sich explizit ausnahmslos auch auf die vollkommen symmetrische Ausführungsvariante der Erfindung.

Die selbstklebenden Acrylatmassen der Schichten SK1 und SK2 sind jeweils eine Haftklebemasse (PSA; englisch: "pressure sensitive adhesives"). Die Begriffe "selbstklebend" und "haftklebend" werden im Rahmen dieser Schrift insofern synonym verwendet.

Haftklebemassen sind insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

## Erfindungsgemäß einsetzbare Klebemassen

Im erfindungsgemäßen Sinne für die Selbstklebemassen SK1 und SK2 verwendbar sind acrylatbasierende Klebemassen auf Lösemittelbasis, auf wässriger Basis oder auch als Hotmeltsystem, beispielsweise eine Masse auf Acrylathotmelt-Basis, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird.

Die Klebemasse auf Acrylathotmelt-Basis kann chemisch vernetzt sein.

Eine Klebemasse, die sich ebenfalls als geeignet zeigt, ist eine niedrigmolekulare Acrylatschmelzhaftklebemasse wie zum Beispiel acResin® UV von BASF und Acrylatdispersionshaftklebmassen wie zum Beispiel unter dem Handelsnamen Acronal® von der BASF erhältlich.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substi¬tuierten (Meth)acrylamiden, Maleinsäureanhydrid und anderen Vinylverbindungen wie Vinylestern, insbesondere Vinyl¬acetat, Vinylalkoholen und/oder Vinylethern eingesetzt.

Der Restlösungsmittel-Gehalt sollte unter 1 Gew.-% beitragen.

Eine andere bevorzugte Ausführungsform ist eine Haftklebemasse, die ein Polyacrylatpolymerisat, enthält. Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Erfindungsgemäß kann es sich um ein mit Epoxidgruppen vernetzbares Polyacrylat handeln. Entsprechend werden als Monomere oder Comonomere bevorzugt funktionelle, mit Epoxidgruppen vernetzungsfähige Monomere eingesetzt, hier kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist.

Weitere Monomere, die als Comonomere für das Polyacrylat verwendet werden können, sind zum Beispiel Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Bevorzugt wird ein Polyacrylat eingesetzt, das auf die folgende Monomerzusammensetzung zurückgeführt werden kann:

i) Acrylsäureester und/oder Methacrylsäureester der folgenden Formel

$$CH2=C(R^1)(COOR^2)$$

wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,

ii) olefinisch ungesättigte Monomere mit funktionellen Gruppen der für eine Reaktivität mit Epoxidgruppen bereits definierten Art,

iii) optional weitere Acrylate und/oder Methacrylate und/oder olefinisch ungesättigte Monomere, die mit der Komponente (i) copolymerisierbar sind.

Weiter vorzugsweise werden zur Anwendung des Polyacrylats als Haftkleber die Anteile der entsprechenden Komponenten (i), (ii), und (iii) derart gewählt, dass das Polymerisationsprodukt insbesondere eine Glastemperatur kleiner gleich 15 °C (ermittelt mit DSC (Differential Scanning Calorimetry) gemäß DIN 53 765 bei einer Aufheizrate von 10 K/min) aufweist.

Es ist zur Herstellung von Haftklebemassen sehr vorteilhaft, die Monomere der Komponente (i) mit einem Anteil von 45 bis 99 Gew.-%, die Monomere der Komponente (ii) mit einem Anteil von 1 bis 15 Gew.-% und die Monomere der Komponente (iii) mit einem Anteil von 0 bis 40 Gew.-% zu wählen (die Angaben sind bezogen auf die Monomermischung für das "Basispolymer", also ohne Zusätze eventueller Additive zu dem fertigen Polymer wie Harze).

Die Monomere der Komponente (i) sind insbesondere weichmachende und/oder unpolare Monomere. Vorzugsweise werden für die Monomere (i) Acrylmonomere eingesetzt, die Acryl- und Methacrylsäureester mit Alkylgruppen, bestehend aus 4 bis 18 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat und deren verzweigten Isomere wie zum Beispiel 2-Ethylhexylacrylat oder 2-Ethylhexylmethacrylat.

Bevorzugt werden für die Komponente (ii) Monomere mit solchen funktionellen Gruppen eingesetzt, die aus der folgenden Aufzählung ausgewählt sind:

Hydroxy-, Carboxy-, Sulfonsäure- oder Phosphonsäuregruppen, Säureanhydride, Epoxide, Amine.

Besonders bevorzugte Beispiele für Monomere der Komponente (ii) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Beispielhaft genannte Monomere für die Komponente (iii) sind: Methylacrylat, Ethylacrylat, Propylacrylat, Methylmethacrylat, Ethylmethacrylat, Benzylacrylat, Benzylmethacrylat, sek.-Butylacrylat, tert. Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide wie beispielsweise N,N-Dimethylacrylamid, N,N-Dimethylmethacrylamid, N- Benzylacrylamide, N-Isopropylacrylamid, N- tert. Butylacrylamid, N-tert. Octylacrylamid, N-Methylolacrylamid, N-Methylolmethacrylamid, Acrylnitril, Methacrylnitril, Vinylether wie Vinylmethylether, Ethylvinylether, Vinylisobutylether, Vinylester wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, $\alpha$- und p-Methylstyrol, $\alpha$-Butylstyrol, 4-n-Butylstyrol, 4-n-Decylstyrol, 3,4 Dimethoxystyrol. Makromonomere wie 2-Polystyrolethylmethacrylat (Molekulargewicht $M_W$ von 4000 bis 13000 g/mol), Poly(Methylmethacrylat)ethylmethacrylat ($M_W$ von 2000 bis 8000 g/mol).

Monomere der Komponente (iii) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen sind, zum Beispiel Tetrahydrofufurylacrylat, N-tert-Butylacrylamid, Allylacrylat wobei diese Aufzählung nicht abschließend ist.

Weiterhin sind Gegenstand der Zusammensetzung der Haftklebemasse Vernetzer auf Epoxid-Basis. Als epoxidgruppenhaltige Substanzen werden insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein. Vernetzer auf Epoxidbasis können auch in oligomerer oder polymerer Form eingesetzt werden.

Die Mischung aus Acrylaten kann ihrerseits weiter vorzugsweise die folgende Zusammensetzung aufweisen:

(I) 90 bis 99 Gew.-% n-Butylacrylat und/oder 2-Ethylhexylacrylat
(II) 1 bis 10 Gew.-% eines ethylenisch ungesättigten Monomers mit einer Säure- oder Säureanhydridfunktion

wobei sich bevorzugt (I) und (II) zu 100 Gew.-% addieren.

Bevorzugt bildet das Monomer (I) eine Mischung aus 2-Ethylhexylacrylat und n-Butylacrylat, weiter vorzugsweise zu gleichen Teilen.

Als Monomer (II) kommen vorteilhaft in Betracht zum Beispiel Acrylsäure, Methacrylsäure, Itaconsäure, Maleinsäure, Fumarsäure und/oder Maleinsäureanhydrid.

Bevorzugt sind Acrylsäure oder Methacrylsäure, gegebenenfalls die Mischung aus beiden.

Zur Erzielung haftklebriger Eigenschaften sollte sich die Klebmasse bei der Verarbeitungstemperatur oberhalb ihrer Glastemperatur befinden, um viskoelastische Eigenschaften zu haben. Die Glasübergangstemperatur der Haftklebemasseformulierung (Polymer-Klebrigmachermischung) liegt daher bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatcopolymere lässt sich gemäß der Gleichung von Fox aus den Glasübergangstemperaturen der Homopolymere und ihren relativen Mengenverhältnissen abschätzen).

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur **Fox**-Gleichung (vergleiche T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad \text{(G1)}$$

n = Laufzahl über die eingesetzten Monomere,
$W_n$ = Massenanteil des jeweiligen Monomers n (Gew.-%) und
$T_{G,n}$ = jeweilige Glasübergangstemperatur des Homopolymers aus den jeweiligen Monomeren n in K.

Analog kann die Gleichung G1 auch zur Bestimmung und Vorhersage der Glasübergangstemperatur von Polymergemischen angewendet werden. Dann gilt, sofern es sich um homogene Mischungen handelt,

n = Laufzahl über die eingesetzten Polymere,
$W_n$ = Massenanteil des jeweiligen Polymeren n (Gew.-%) und
$T_{G,n}$ = jeweilige Glasübergangstemperatur des Polymeren n in K.

Durch den eventuellen Zusatz von Klebrigmachern erhöht sich die Glasübergangstemperatur zwangsläufig, je nach Zugabemenge, Verträglichkeit und Erweichungstemperatur um ca. 5 bis 40 K.

Es sind daher Acrylatcopolymere mit einer Glasübergangstemperatur von höchstens 0 °C bevorzugt.

In einer weiteren vorteilhaften Ausführung der Erfindung ist der Klebemasse eine zweite, mit der Polyacrylatkomponente im Wesentlichen nicht mischbare Polymerkomponente auf Elastomerbasis (im Folgenden Elastomerkomponente genannt), insbesondere ein oder mehrere Synthesekautschuke, zugemischt.

Vorzugsweise umfasst die Klebemasse dann zumindest die folgenden beiden Komponenten:

(P) eine erste Polymerkomponente auf Polyacrylatbasis

(E) eine zweite, mit der Polyacrylatkomponente im Wesentlichen nicht mischbare Polymerkomponente auf Elastomerbasis, insbesondere eines Synthesekautschuks (im folgenden Elastomerkomponente genannt).

Die Polyacrylatkomponente P liegt insbesondere zu 60 Gew.-% bis 90 Gew.-%, bevorzugt 65 Gew.-% bis 80 Gew.-% vor, und die Elastomerkomponente (E) liegt insbesondere zu 10 Gew.-% bis 40 Gew.-%, bevorzugt 15 Gew.-% bis 30 Gew.-% vor, bezogen auf die Summe von Polyacrylatkomponente (P) und Elastomerkomponente (E) als 100 Gew.-%. Die Gesamtzusammensetzung der Klebemasse kann sich insbesondere auf diese beiden Komponenten beschränken, es können aber auch weitere Komponenten wie Additive und dergleichen hinzukommen (siehe hierzu auch weiter unten).

Die zweite Polymerkomponente (Elastomerkomponente (E)) ist erfindungsgemäß mit der ersten Polymerkomponente (Polyacrylatkomponente (P)) im Wesentlichen nicht mischbar, so dass die Klebemasse in der Klebemassenschicht in zumindest zwei separaten Phasen vorliegt. Insbesondere bildet die eine Phase eine Matrix und die andere Phase eine Vielzahl in der Matrix angeordneter Domänen aus.

Homogene Gemische sind auf molekularer Ebene vermischte Stoffe, homogene Systeme dementsprechend einphasige Systeme. Die zugrunde liegenden Stoffe werden im Rahmen dieser Schrift in synonymer Weise als miteinander "homogen vermischbar", "verträglich" und "kompatibel" bezeichnet. Dementsprechend sind zwei oder mehr Komponenten synonym "nicht homogen vermischbar", "nicht verträglich" und "nicht kompatibel", wenn sie nach inniger Vermengung kein homogenes System, sondern zumindest zwei Phasen ausbilden. Als synonym "teilweise homogen mischbar", "teilweise verträglich", "teilverträglich" und "teilweise kompatibel" werden Komponenten angesehen, die bei inniger Vermengung miteinander (zum Beispiel durch Scherung, in der Schmelze oder in Lösung und anschließendem Eliminieren des Lösungsmittels) zumindest zwei Phasen ausbilden, die jeweils reich an einer der Komponenten sind, wobei aber eine oder beide der Phasen jeweils einen mehr oder weniger großen Teil der anderen Komponenten homogen eingemischt aufweisen kann.

Die Polyacrylatkomponente (P) stellt für sich bevorzugt eine homogene Phasen dar. Die Elastomerkomponente (E) kann in sich homogen vorliegen, oder in sich selbst Mehrphasigkeit aufweisen, wie es von mikrophasenseparierenden Blockcopolymeren bekannt ist. Polyacrylat- und Elastomerkomponente sind vorliegend so gewählt, dass sienach inniger Vermengung - bei 23 °C (also der üblichen Anwendungstemperatur für Klebemassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann -, dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die erfindungsgemäß eingesetzte Klebemasse liegt dementsprechend zumindest bei Raumtemperatur (23 °C), in zumindest zweiphasiger Morphologie vor. Sehr bevorzugt sind die Polyacrylatkomponente (P) und die Elastomerkomponente (E) in einem Temperaturbereich von 0 °C bis 50 °C, noch mehr bevorzugt von - 30 °C bis 80 °C im Wesentlichen nicht homogen mischbar.

Komponenten sind im Sinne dieser Schrift insbesondere dann als "im Wesentlichen nicht miteinander mischbar" definiert, wenn sich die Ausbildung zumindest zweier beständiger Phasen physikalisch und/oder chemisch nachweisen lässt, wobei die eine Phase reich an der einen Komponente - der Polyacrylatkomponente (P) - und die zweite Phase reich an der anderen Komponente - der Elastomerkomponente (E) - ist. Ein geeignetes Analysesystem für eine Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen bei der dynamischen Differenzkalometrie (DDK) aufweisen. Phasentrennung liegt erfindungsgemäß dann vor, wenn sie sich zumindest durch eine der Analysenmethoden eindeutig zeigen lässt.

Die Phasentrennung kann insbesondere derart realisiert sein, dass es diskrete Bereiche ("Domänen"), die reich an einer Komponente sind (im Wesentlichen aus einer der Komponente gebildet und frei von der anderen Komponente), in einer kontinuierlichen Matrix, die reich an der anderen Komponente ist (im Wesentlichen aus der anderen Komponente gebildet und frei von der ersten Komponente), gibt.

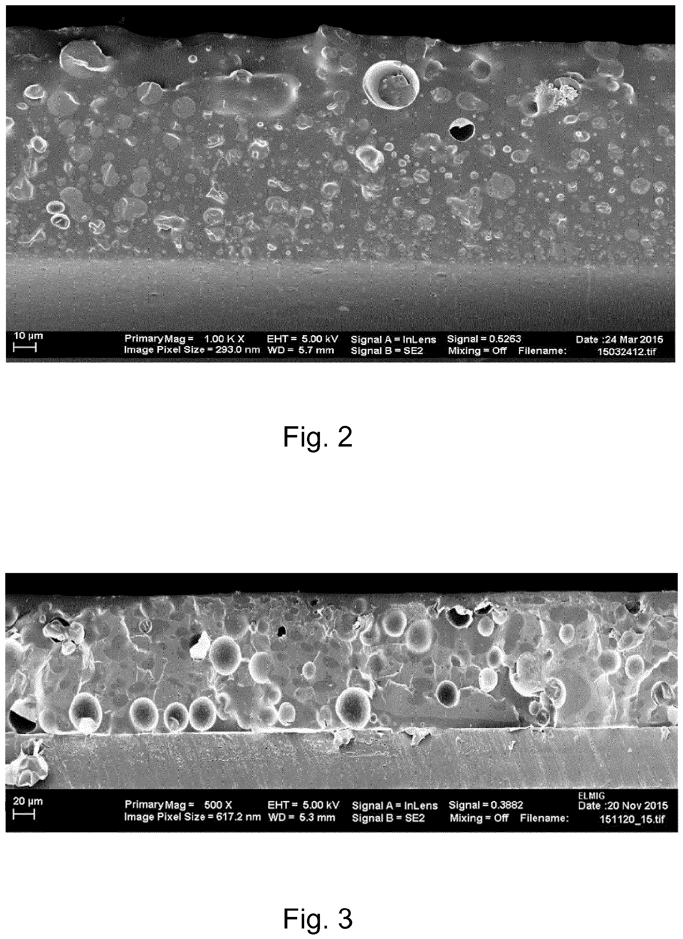

Die Phasentrennung für die erfindungsgemäß eingesetzten Klebemassen findet insbesondere derart statt, dass die Elastomerkomponente (E) dispergiert in einer kontinuierlichen Matrix der Polyacrylatkomponente (P) vorliegt (siehe Figur 2). Die durch die Elastomerkomponente (E) gebildeten Bereiche (Domänen) liegen bevorzugt im Wesentlichen kugelförmig vor. Die durch die Elastomerkomponente (E) gebildeten Bereiche (Domänen) können auch von der Kugelform abweichen, insbesondere verzerrt wie zum Beispiel in Beschichtungsrichtung elongiert und orientiert vorliegen. Die Größe der Elastomer-Domänen liegt in ihrer größten Ausdehnung typischerweise - aber nicht zwingend - zwischen 0,5 μm und 150 μm, insbesondere zwischen 1 μm und 30 μm. Andere Domänenformen sind ebenfalls möglich, so zum Beispiel schichtförmige oder stäbchenförmige, wobei auch diese in ihrer Gestalt von idealen Strukturen abweichen können und zum Beispiel gebogen oder verzerrt sein können.

Die Polyacrylatkomponente (P) und die Elastomerkomponente (E) bestehen jeweils aus einer Basispolymerkomponente, die ein Homopolymer, ein Copolymer oder eine Mischung aus Polymeren (Homopolymeren und/oder Copolymeren) sein kann, und gegebenenfalls Zusätzen (Cokomponenten, Additiven). Vereinfachend wird die Basispolymerkomponente im Folgenden als "Basispolymer" bezeichnet, ohne dass hierdurch Polymermischungen für die jeweilige Basispolymerkomponente ausgenommen werden sollen; entsprechend wird unter "Polyacrylat-Basispolymer" die Basispolymerkomponente der Polyacrylatkomponente und unter "Elastomer-Basispolymer" die Basispolymerkomponente der Elastomerkomponente der Klebmasse verstanden.

Die Polyacrylatkomponente (P) und/oder die Elastomerkomponente (E) können jeweils als 100-%-Systeme, das heißt ausschließlich auf ihre jeweilige Basispolymerkomponente beruhend und ohne weitere Beimischung von Harzen, Additiven oder dergleichen, vorliegen. In weiterer bevorzugterWeise sind einer oder beider dieser beiden Komponenten neben der Basispolymerkomponente weitere Komponenten beigemischt wie beispielweise Harze.

In einer vorteilhaften Ausführung der Erfindung sind die Polyacrylatkomponente (P) und die Elastomerkomponente (E) ausschließlich aus ihrer jeweiligen Basispolymerkomponente zusammengesetzt, so dass keine weiteren polymeren Komponenten vorhanden sind, insbesondere keine Harze anwesend sind. In einer Weiterentwicklung umfasst die gesamte Klebemasse außer den beiden Basispolymerkomponenten keine weiteren Bestandteile.

Der polyacrylatbasierenden Klebemasse beziehungsweise der Polyacrylatkomponente (P) sind insbesondere vorteilhaft ein oder mehrere Vernetzer für eine chemischen und/oder eine physikalische Vernetzung zugemischt. Da prinzipiell auch strahlenchemische Vernetzung der Polyacrylatkomponente (P) möglich ist, sind Vernetzer aber nicht zwingend vorhanden.

Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Der Vernetzungsgrad hängt von der Zahl der gebildeten Brücken ab.

Als Vernetzer sind vorliegend prinzipiell alle dem Fachmann bekannten Vernetzer-Systeme für die Ausbildung insbesondere kovalenter, koordinativer oder assoziativer Bindungssysteme mit entsprechend ausgestatteten (Meth)acrylat-Monomeren geeignet, je nach Natur der gewählten Polymere und ihrer funktionellen Gruppen. Beispiele für chemische Vernetzungssysteme sind di- oder mehrfachfunktionale Isocyanate oder di- oder mehrfachfunktionale Epoxide oder di- oder mehrfachfunktionale Hydroxide oder di- oder mehrfachfunktionale Amine oder di- oder mehrfachfunktionale Säureanhydride. Kombinationen verschiedener Vernetzer sind ebenso denkbar.

Als weitere geeignete Vernetzer seien Chelat-Bildner genannt, die in Kombination mit Säurefunktionalitäten in Polymerketten Komplexe bilden, die als Vernetzungspunkte wirken.

Zur effektiven Vernetzung ist es insbesondere von Vorteil, wenn zumindest ein Teil der Polyacrylate funktionelle Gruppen aufweisen, mit denen die jeweiligen Vernetzer zur Reaktion kommen können. Bevorzugt werden hierfür Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere für Polyacrylate sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Als besonders vorteilhaft hat es sich erwiesen, als Vernetzer 0,03 bis 0,2 Gewichtsteile, insbesondere 0,04 bis 0,15 Gewichtsteile N,N,N',N'-tetrakis(2,3-epoxypropyl)-m-xylen-a,a'-diamin (Tetraglycidyl-meta-Xylendiamin; CAS 63738-22-7), bezogen auf 100 Gewichtsteile Polyacrylat-Basispolymer, einzusetzen.

Alternativ oder zusätzlich kann es vorteilhaft sein, die Klebemasse strahlenchemisch zu vernetzen. Hierzu bieten sich als Strahlung ultraviolettes Licht (vor allem, wenn der Formulierung geeignete Photoinitiatoren zugesetzt sind oder zumindest ein Polymer in der Acrylatkomponente Comonomere mit Einheiten photoinitiierender Funktionalität enthält) und/oder Elektronenstrahlen an.

Für die strahleninduzierte Vernetzung kann es von Vorteil sein, wenn ein Teil der eingesetzten Monomere funktionelle Gruppen enthalten, die eine nachfolgende strahlenchemische Vernetzung unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-*tert*-Butylacrylamid und Allylacrylat.

Für die chemische und/oder physikalische und/oder strahleninduzierte Vernetzung wird insbesondere auf den einschlägigen Stand der Technik verwiesen.

Zur Erzielung gewünschter Eigenschaften der Haftklebemasse, beispielsweise um eine hinreichende Kohäsion der Haftklebemassen zu erreichen, werden die Haftklebemassen in der Regel vernetzt, das heißt, die einzelnen Makromoleküle werden durch Brückenbindungen miteinander verknüpft. Die Vernetzung kann auf unterschiedliche Weisen geschehen, so gibt es physikalische, chemische oder thermische Vernetzungsmethoden.

Als Vernetzung von Polymeren wird insbesondere eine Reaktion bezeichnet, bei der viele zunächst lineare oder verzweigte Makromoleküle durch Brückenbildung zwischen den einzelnen Makromolekülen zu einem mehr oder weniger verzweigten Netzwerk verknüpft werden. Die Brückenbildung erfolgt dabei insbesondere, indem geeignete chemische Moleküle - sogenannte Vernetzer oder Vernetzersubstanzen - mit den Makromolekülen reagieren, zum Beispiel mit bestimmten funktionellen Gruppen der Makromoleküle, die für das jeweilige Vernetzermolekül besonders angreifbar sind. Die Stellen des Vernetzermoleküls, die an den Makromolekülen angreifen, werden in der Regel als "reaktive Zentren" bezeichnet. Vernetzermoleküle können zwei Makromoleküle miteinander verknüpfen - indem einund dasselbe Vernetzermolekül mit zwei unterschiedlichen Makromolekülen reagiert, also insbesondere mindestens zwei reaktive Zentren besitzt -, oder Vernetzermoleküle können auch mehr als zwei reaktive Zentren aufweisen, so dass ein einziges Vernetzermolekül dann auch drei oder mehr Makromoleküle miteinander verknüpfen kann. Als Nebenreaktion kann es zu intramolekularen Reaktionen kommen, wenn ein- und dasselbe Vernetzermolekül mit mindestens zwei seiner reaktiven Zentren an ein- und demselben Makromolekül angreift. Im Sinne einer effektiven Vernetzung des Polymers sind solche Nebenreaktionen in der Regel unerwünscht.

Es kann unterschieden werden zwischen verschiedenen Typen von Vernetzern, nämlich 1.) kovalenten Vernetzern, nämlich solchen, die an den zu verknüpfenden Makromolekülen kovalent angreifen und somit eine kovalente chemische Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren kovalente Bindungen ausbildenden chemischen Reaktionen in Frage. 2.) koordinativen Vernetzern, nämlich solchen, die an den zu verknüpfenden Makromolekülen koordinativ angreifen und somit eine koordinative Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren koordinative Bindungen ausbildenden chemischen Reaktionen in Frage.

**Spezielle Ausführung der erfindungsgemäß eingesetzten Klebemasse**

Die Klebemasse der Schicht SK1 oder der Schicht SK2 oder bevorzugt beider Schichten SK1 und SK2 sind gemäß einer besonders bevorzugten Ausführungsform der Erfindung - im Folgenden als "spezielle Ausführungsform" bezeichnet - vernetzbare Klebemassen, die insbesondere bestehen aus

(a) zumindest einer ersten Basiskomponente mit

(a1) als erster Polymerkomponente eine Basispolymerkomponente (im Folgenden auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren,

wobei zumindest eines der Homopolymere oder zumindest eines der Copolymere, insbesondere alle der Polymere der Basispolymerkomponente für die Vernetzung funktionelle Gruppen aufweisen,

(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;

(b) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,

(b2) gegebenenfalls weitere mit dem Basispolymer im Wesentlichen nicht homogen mischbare und in diesem nicht lösliche Bestandteile, wie bestimmte Harze oder Additive, wobei die Komponente (f) insbesondere ganz oder teilweise mit der optional vorhandenen weiteren Polymerkomponente (b) homogen mischbar ist;

(c) Vernetzern, nämlich

(c1) zumindest einen kovalenten Vernetzer,

(c2) zumindest einen koordinativen Vernetzer,

und

(d) gegebenenfalls Lösemittel oder Lösemittelreste.

Die erste Basiskomponente (a) kann dabei insbesondere eine Polyacrylatkomponente (P) und die zweite Komponente (b) insbesondere eine Elastomerkomponente (E) im Sinne der obigen Ausführungen sein.

Als Polymere für die Basispolymerkomponente (a1) für die spezielle Ausführungsform kommen insbesondere solche Polymere und Polymermischungen in Frage, die sich durch sowohl durch kovalente als auch durch koordinative Vernetzer vernetzen lassen. Dies sind insbesondere Polymere, die für die Vernetzung freie Säuregruppen aufweisen.

Als bevorzugte Basispolymere lassen sich Acrylat-Copolymere einsetzen, insbesondere solche Polymere (Copolymere, Polymermischungen), die zu mindestens 50 Gew.-% auf Acrylmonomere zurückzuführen sind. Als Comonomere für die Einführung der vernetzungsfähigen Gruppen werden dabei freie Säuregruppen aufweisende copolymerisierbare Monomere gewählt, besonders bevorzugt wird Acrylsäure eingesetzt. säuregruppen enthaltende Monomere, wie beispielsweise Acrylsäure, haben die Eigenschaft, die haftklebrigen Eigenschaften der Haftklebemasse zu beeinflussen. Wird Acrylsäure verwendet, wird diese bevorzugt in einem Anteil von bis zu maximal 12,5 Gew.-%, bezogen auf die Gesamtheit der Monomere der Basispolymerkomponente, verwendet. Dabei wird - in Abhängigkeit der jeweils eingesetzten Vernetzermengen - bevorzugt zumindest so viel Acrylsäure einpolymerisiert, dass genug Säuregruppen zugegen sind, dass es zu einer im Wesentlichen vollständigen Umsetzung der Vernetzer kommen kann.

Die Polyacrylatkomponente (a) der vorteilhaften Haftklebemasse der speziellen Ausführungsform stellt für sich bevorzugt eine homogene Phase dar. Die Elastomerkomponente (b) kann in sich homogen vorliegen oder in sich selbst Mehrphasigkeit aufweisen, wie es von mikrophasenseparierenden Blockcopolymeren bekannt ist. Polyacrylat- und Elastomerkomponente sind vorliegend so gewählt, dass sie - nach inniger Vermengung - bei 23 °C (also der üblichen Anwendungstemperatur für Klebemassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann - , dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die vorteilhafte Klebemasse der speziellen Ausführungsform liegt dementsprechend zumindest bei Raumtemperatur (23 °C), in zumindest zweiphasiger Morphologie vor. Sehr bevorzugt sind die Polyacrylatkomponente und die Elastomerkomponente in einem Temperaturbereich von 0 °C bis 50 °C, noch mehr bevorzugt von - 30 °C bis 80 °C im Wesentlichen nicht homogen mischbar.

Die Polyacrylatkomponente und/oder die Elastomerkomponente können jeweils als 100-%-Systeme, das heißt ausschließlich auf ihre jeweilige Polymerkomponente ((a1) beziehungsweise (b1)) beruhend und ohne weitere Beimischung von Harzen, Additiven oder dergleichen, vorliegen. In weiterer bevorzugter Weise sind einer oder beider dieser beiden Komponenten neben der Basispolymerkomponente weitere Komponenten beigemischt, wie beispielsweise Harze.

In einer vorteilhaften Realisierung der speziellen Ausführungsform sind die Polyacrylatkomponente und die Elastomerkomponente ausschließlich aus ihrer jeweiligen Polymerkomponente ((a1) beziehungsweise (b1)) zusammengesetzt, so dass keine weiteren polymeren Komponenten vorhanden sind, insbesondere keine Harze anwesend sind. In einer Weiterentwicklung umfasst der Polymeranteil der gesamte Klebemasse außer den beiden Polymerkomponenten (a1) und (b1) keine weiteren Bestandteile (unbeschadet Vernetzer im Sinne der Komponente (c) und gegebenenfalls vorhandene Lösemittel(reste) (d)).

Die Polyacrylatkomponente (a) der vorteilhaften Klebemasse der speziellen Ausführungsform umfasst insbesondere eines oder mehrere Polymere auf Polyacrylatbasis, die die Basispolymerkomponente (a1) darstellen.

Polymere auf Polyacrylatbasis sind insbesondere solche Polymere, die zumindest überwiegend - insbesondere zu mehr als 60 Gew.-% - auf Acrylsäureestern und/oder Methacrylsäure, sowie gegebenenfalls deren freien Säuren, als Monomere (im Folgenden als "Acrylmonomere" bezeichnet) zurückzuführen sind. Polyacrylate sind bevorzugt durch freie radikalische Polymerisation erhältlich. Polyacrylate können gegebenenfalls weitere Bausteine auf Basis weiterer, nicht-acrylischer copolymerisierbarer Monomer enthalten. Bei den Polyacrylaten kann es sich um Homopolymere und/oder insbesondere um Copolymere handeln. Die Bezeichnung "Copolymer" umfasst im Sinne dieser Erfindung sowohl solche Copolymere, in denen die bei der Polymerisation eingesetzten Comonomere rein statistisch eingebaut sind, als auch solche, bei denen Gradienten in der Comonomerzusammensetzung und/oder lokale Anreicherungen einzelner Comonomersorten sowie ganze Blöcke eines Monomers in den Polymerketten vorkommen. Auch alternierende Comonomerabfolgen sind denkbar.

Die Polyacrylate können beispielsweise von linearer, verzweigter, sternförmiger oder gepfropfter Struktur sein, und es kann sich um Homopolymere oder Copolymere handeln. Vorteilhaft liegt die mittlere Molmasse (Gewichtsmittel $M_W$) zumindest eines der Polyacrylate des Polyacrylat-Basispolymers, bei mehreren vorhandenen Polyacrylaten vorteilhaft des überwiegenden Gewichtsteils der Polyacrylate, insbesondere aller vorhandenen Poylacrylate im Bereich von 250 000 g/mol bis 10 000 000 g/mol, bevorzugt im Bereich von 500 000 g/mol bis 5 000 000 g/mol.

In sehr bevorzugter Vorgehensweise sind die Vernetzer der Komponente (c) der speziellen Ausführumngsform in die Basiskomponente homogen einmischbar, gegebenenfalls nach vorheriger Lösung in geeigneten Lösemitteln.

Als kovalente Vernetzer (Komponente (c1)) für die spezielle Ausführungsform werden bevorzugt Glycidylamine eingesetzt. Als erfindungsgemäß besonders bevorzugte Vertreter seien exemplarisch N,N,N',N'-Tetrakis(2,3-epoxypropyl)cyclohexane-1,3-dimethylamine und N,N,N',N'-tetrakis(2,3-epoxypropyl)-m-xylen-a,a'-diamin genannt.

Vorteilhaft können weiterhin mehrfachfunktionelle Epoxide, insbesondere Epoxycyclohexylcarboxylate als kovalente Vernetzer eingesetzt werden. Insbesondere 2,2-Bis(hydroxymethyl)-1,3-propanediol oder (3,4-Epoxycyclohexan)methyl-3,4-epoxycyclohexylcarboxylat seinen hier exemplarisch genannt.

Weiterhin können erfindungsgemäß multifunktionelle Azeridine eingesetzt. Hierzu sei beispielsweise Trimethylolpropane tris(2-methyl-1-aziridinepropionate) genannt.

Als kovalente Vernetzer können weiter bevorzugt Isocyanate eingesetzt werden, insbesondere multifunktionelle Isocyanatverbindungen. Als multifunktionelle Isocyanatverbindung können beispielsweise Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(p-isocyanatphenyl)thiophos-phit, Polymethylenpolyphenylisocyanat eingesetzt werden. Sie können allein oder in einer Kombination von zwei oder mehr Arten davon verwendet werden.

In der speziellen Ausführungsform wird erfindungsgemäß zumindest ein kovalenter Vernetzer eingesetzt, es können aber auch zwei oder mehrere kovalente Vernetzer zum Einsatz kommen, etwa beispielsweise die zwei vorgenannten Diamin-Verbindungen in Kombination miteinander.

Als koordinative Vernetzer (Komponente (c2)) für die spezielle Ausführungsform kommen insbesondere Chelatverbindungen, insbesondere mehrwertige Metallchelatverbindungen in Frage. Unter dem Begriff "mehrwertige Metallchelatverbindung" werden solche Verbindungen verstanden, bei der ein mehrwertiges Metall koordinativ an eine oder mehrere organische Verbindungen gebunden ist. Als mehrwertiges Metallatom können Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV), Ti(IV) und dergleichen eingesetzt werden. Von diesen sind Al(III), Zr(IV) und Ti(IV) bevorzugt.

Als Liganden der koordinativen Vernetzer der speziellen Ausführungsform können grundsätzlich alle bekannten Liganden diesen. Die für die koordinative Bindung der organischen Verbindung genutzten Atome können aber insbesondere solche Atome sein, die feie Elektronenpaare aufweisen, wie beispielsweise Sauerstoffatome, Schwefelatome, Stickstoffatome und dergleichen. Als organische Verbindung können beispielsweise Alkylester, Alkoholverbindungen, Carbonsäureverbindungen, Etherverbindungen, Ketonverbindungen und dergleichen genutzt werden. Insbesondere seien Titanchelatverbindungen wie Titandipropoxidbis(acetylacetonat), Titandibutoxidbis(octylenglycholat), Titandipropoxid-bis(ethylacetoacetat), Titandipropoxidbis(lactat), Titandipropoxidbis(triethanolaminat), Titandi-n-butoxidbis(triethanolaminat), Titantri-n-butoxidmonostearat, Butyltitanatdimer, Poly(titanacetylacetonat) und dergleichen; Aluminiumchelat- Verbindungen wie Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylacetoacetat, Aluminiumdisec-butoxidmonoethylacetoacetat, Aluminiumtriacetylacetonat, Aluminiumtriethylacetoacetonat, Aluminiummonoacetylacetonatbis(ethylacetoacetonat) und dergleichen und Zirkoniumchelatverbindungen wie Zirkoniumtetraacetylacetonat und dergleichen veranschaulichend aufgeführt. Von diesen sind Aluminiumtriacetylacetonat und Aluminiumdipropoxid bevorzugt. Sie können allein oder in einer Kombination von zwei oder mehr Arten davon verwendet werden.

Kovalente Vernetzer (c1) werden in der speziellen Ausführungsform bevorzugt in einer Gesamtmenge von 0,015 bis 0,04, bevorzugt 0,02 bis 0,035 Gewichtsteile, bezogen auf 100 Gewichtsteile der Basispolymerkomponente (a1) eingesetzt, sehr bevorzugt in einer Menge von 0,03 Gew.%.

Koordinative Vernetzer (c2) werden in der speziellen Ausführungsform bevorzugt in einer Menge von 0,03 bis 0,15, bevorzugt 0,04 bis 0,1 Gewichtsteile bezogen auf 100 Gewichtsteile der Basispolymerkomponente (a1) eingesetzt.

Weiter vorzugsweise werden kovalente Vernetzer und koordinative Vernetzer in der speziellen Ausführungsform derart eingesetzt, dass die koordinativen Vernetzer im molaren Überschuss, bezogen auf die kovalenten Vernetzer, vorliegen. Bevorzugt werden die Vernetzer in den vorstehend genannten Mengen Bereichen eingesetzt, und zwar derart, dass das molare Verhältnis von kovalenten Vernetzern zu koordinativen Vernetzern - also das Verhältnis der eingesetzten Stoffmenge $n_{kov}$ der kovalenten Vernetzer zur eingesetzten Stoffmenge $n_{koord}$ der koordinativen Vernetzer - im Bereich von 1 : 1,3 bis 1 : 4,5 liegt, dementsprechend $1{,}3 \leq n_{koord}/n_{kov} \leq 4{,}5$. Sehr bevorzugt ist ein molares Verhältnis von kovalenten Vernetzern zu koordinativen Vernetzern von 1 : 2 bis 1 : 4.

## Elastomerkomponente der erfindungsgemäß eingesetzten Klebemasse, insbesondere der speziellen Ausführungsform

Wie vorstehend ausgeführt kann die erfindungsgemäß eingesetzte Klebemasse, auch in Form ihrer speziellen Ausführungsform, mit der Polyacrylatkomponente bzw. dem Basispolymer im Wesentlichen nicht homogen mischbare Polymere, insbeosndere eine Elastomerkomponente umfassen. Die mit der Polyacrylatkomponente im Wesentlichen nicht verträgliche Elastomerkomponente umfasst ihrerseits vorteilhaft einen oder unabhängig voneinander gewählt mehrere Synthesekautschuke als Basispolymerkomponente.

Bevorzugt wird als Synthesekautschuk mindestens ein Vinylaromatenblockcopolymer in Form eines Blockcopolymers mit einem Aufbau A-B, A-B-A, $(A\text{-}B)_n$, $(A\text{-}B)_nX$ oder $(A\text{-}B\text{-}A)_nX$, $A\text{-}B\text{-}X(A'\text{-}B')_n$ verwendet, worin

- die Blöcke A beziehungsweise A' unabhängig voneinander für ein Polymer, gebildet durch Polymerisation mindestens eines Vinylaromaten wie beispielweise Styrol oder $\alpha$-Methylstyrol;
- die Blöcke B beziehungsweise B' unabhängig voneinander für ein Polymer, gebildet durch Polymerisation von konjugierten Dienen mit 4 bis 18 C-Atomen und/oder ein Polymer aus einem Isopren, Butadien, einem Farnesen-Isomer oder einem Gemisch aus Butadien und Isopren oder einem Gemisch aus Butadien und Styrol, oder enthaltend vollständig oder teilweise Ethylen, Propylen, Butylen und/oder Isobutylen und/oder für ein teil- oder vollhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke Blockcopolymere mit einem Aufbau wie vorstehend dargelegt. Der Synthesekautschuk kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B beziehungsweise B' (Weichblöcke) und einen oder mehrere glasartige Blöcke A beziehungsweise A' (Hartblöcke). Besonders bevorzugt ist ein Blockcopolymer mit einem Aufbau A-B, A-B-A, $(A\text{-}B)_3X$ oder $(A\text{-}B)_4X$, wobei für A, B und X die vorstehenden Bedeutungen gelten. Ganz besonders bevorzugt sind alle Synthesekautschuke Blockcopolymere mit einem Aufbau A-B, A-B-A, $(A\text{-}B)_3X$ oder $(A\text{-}B)_4X$, wobei für A, B und X die vorstehenden Bedeutungen gelten. Insbesondere ist der Synthesekautschuk ein Gemisch aus Blockcopolymeren mit einem Aufbau A-B, A-B-A, $(AB)_3X$ oder $(A\text{-}B)_4X$, das bevorzugt mindestens Diblockcopolymere A-B und/oder Triblockcopolymere A-B-A enthält.

Weiterhin vorteilhaft ist ein Gemisch aus Diblock- und Triblockcopolymeren und $(A\text{-}B)_n$- oder $(A\text{-}B)_nX$-Blockcopolymeren mit n größer gleich 3.

In einigen vorteilhaften Ausführungsformen wird zusätzlich oder ausschließlich ein Blockcopolymer verwendet, welches ein Multiarm-Blockcopolymer ist. Dieses wird durch die allgemeine Formel

$$Q_m\text{-}Y$$

beschrieben, worin Q einen Arm des Multiarm-Blockcopolymers repräsentiert und m wiederum die Anzahl an Armen darstellt, wobei m eine ganze Zahl von mindestens 3 ist. Y ist der Rest eines Multifunktionsverknüpfungsreagenzes, das zum Beispiel einem Kopplungsreagenz oder einem multifunktionalen Initiator entstammt. Insbesondere hat jeder Arm Q unabhängig die Formel A*-B*, wobei A* und B* jeweils unabhängig zu den übrigen Armen entsprechend der vorstehenden Definitionen für A beziehungsweise A' und B beziehungsweise B' gewählt werden, so dass jeweils A* einen glasartigen Block und B* einen Weichblock repräsentiert. Selbstverständlich ist es auch möglich, für mehrere Arme Q oder alle Arme Q identische A* und/oder identische B* zu wählen.

Die Blöcke A, A' und A* werden im Folgenden gemeinsam als A-Blöcke bezeichnet. Die Blöcke B, B' und B* werden im Folgenden entsprechend gemeinsam als B-Blöcke bezeichnet.

A-Blöcke sind generell glasartige Blöcke mit jeweils einer Glasübergangstemperatur, die oberhalb der Raumtemperatur (unter Raumtemperatur sei im Zusammenhang dieser Erfindung 23 °C verstanden) liegt. In einigen vorteilhaften Ausführungsformen liegt die Glasübergangstemperatur des glasartigen Blockes bei mindestens 40 °C, bevorzugt bei mindestens 60 °C, noch bevorzugter bei mindestens 80 °C oder sehr bevorzugt bei mindestens 100 °C.

Das Vinylaromatenblockcopolymer weist weiterhin generell einen oder mehrere gummiartige B-Blöcke mit einer Glasübergangstemperatur von kleiner als Raumtemperatur auf. In einigen Ausführungsformen ist der Tg des Weichblocks kleiner als -30 °C oder sogar kleiner als -60 °C.

Neben den genannten erfindungsgemäßen und besonders bevorzugten Monomeren für die B-Blöcke umfassen weitere vorteilhafte Ausführungsformen ein polymerisiertes konjugiertes Dien, ein hydriertes Derivat eines polymerisierten konjugierten Diens oder eine Kombinationen davon. In einigen Ausführungsformen umfassen die konjugierten Diene 4 bis 18 Kohlenstoffatome.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Beispielhaft seien für weitere vorteilhafte konjugierte Diene für die B-Blöcke zusätzlich Ethylbutadien, Phenylbutadien, Piperylen, Pentadien, Hexadien, Ethylhexadien und Dimethylbutadien genannt, wobei die polymerisierten konjugierten Diene als Homopolymer oder als Copolymer vorliegen können.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Der Anteil an A-Blöcke bezogen auf die gesamten Blockcopolymere beträgt dabei im Mittel bevorzugt 10 bis 40 Gew.-%, mehr bevorzugt 15 bis 33 Gew.-%.

Bevorzugt als Polymer für A-Blöcke wird Polystyrol. Bevorzugt als Polymere für B-Blöcke wird Polybutadien, Polyisopren, Polyfarnesen und deren teil- oder vollhydrierten Derivate wie Polyethylenbutylen, Polyethylenpropylen, Polyethylenethylenpropylen oder Polybutylenbutadien oder Polyisobutylen. Sehr bevorzugt wird Polybutadien.

Gemische verschiedener Blockcopolymere können zum Einsatz kommen. Bevorzugt werden Triblockcopolymere ABA und/oder Diblockcopolymere AB eingesetzt.

Blockcopolymere können linear, radial oder sternförmig (Multiarm) sein.

**Weitere Komponenten** der erfindungsgemäß **eingesetzten Klebemasse, insbesondere der speziellen Ausführungsform**

Die erfindungsgemäß eingesetzten Klebmassen können insbesondere harzfrei sein, da die Polyacrylatkomponente häufig bereits selbst typischerweise Haftklebrigkeit aufweist und der haftklebrige Charakter auch dann erhalten bleibt, wenn die Elastomerkomponente zugegen ist. Trotzdem kann es von Interesse sein, die klebtechnischen Eigenschaften weiter zu verbessern oder auf spezielle Anwendungen hin zu optimieren, daher können den Klebemassen in vorteilhafter Weiterentwicklung der Erfindung Klebharze beigemischt werden.

Der Einsatz von Klebrigmachern, auch als Klebharze bezeichnet, zur Steigerung der Klebkräfte von Haftklebemassen ist grundsätzlich bekannt. Vorzugsweise werden der selbstklebenden Acrylatmasse 15 bis 100 Gewichtsteile Klebrigmacher (bezogen auf die Polymere, also Acrylate plus gegebenenfalls Elastomere wie Synthesekautschuke) hinzugefügt, zumeist 20 bis 80 Gewichtsteile, weiter bevorzugt 30 bis 50 Gewichtsteile.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Als Klebrigmacher sind prinzipiell alle bekannten Stoffklassen geeignet. Klebrigmacher sind beispielsweise nicht hydrierte, partiell, selektiv oder vollständig hydrierte Kohlenwasserstoffharze (zum Beispiel Polymere auf Basis ungesättigter $C_5$-, $C_5$-/$C_9$- oder $C_9$-Monomere), Terpenphenolharze, Polyterpenharze auf Basis von Rohstoffen wie zum Beispiel $\alpha$-, ß-Pinen und/oder oder $\delta$-Limonen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009).

Zur weiteren Verbesserung der Eigenschaften kann die Klebmasseformulierung optional mit Lichtschutz- oder primären und/oder sekundären Alterungsschutzmitteln abgemischt sein.

Als Alterungsschutzmittel können Produkte auf Basis sterisch gehinderter Phenole, Phosphite, Thiosynergisten, sterisch gehinderter Amine oder UV-Absorber eingesetzt werden.

Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168.

Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels beziehungsweise Alterungsschutzmittelpaketes sollte in einem Bereich zwischen 0,1 und 10 Gew.-Teilen, bevorzugt in einem Bereich zwischen 0,2 und 5 Gew.-Teilen, besonders bevorzugt in einem Bereich zwischen 0,5 und 3 Gew.-Teilen bezogen auf den Polymergehalt (Acrylate plus gegebenenfalls Elastomere wie Synthesekautschuke) liegen.

Zur Verbesserung der Verarbeitungseigenschaften kann die Formulierung weiterhin mit üblichen Prozesshilfsmitteln wie Rheologieadditiven (Verdicker), Entschäumern, Entlüftern, Netzmitteln oder Verlaufsmitteln abgemischt sein. Geeignete Konzentrationen liegen im Bereich von 0,1 bis zu 5 Gewichtsteilen bezogen auf den Polymergeghalt (Acrylate plus gegebenenfalls Elastomere wie Synthesekautschuke).

Füllstoffe (verstärkend oder nicht verstärkend) wie Siliziumdioxide (sphärisch, nadelförmig, plättchenförmig oder unregelmäßig wie die pyrogenen Silicas), Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf den Polymergeghalt (Acrylate plus gegebenenfalls Elastomere wie Synthesekautschuke).

Die selbstklebende Acrylatmasse, die die Schichten SK1 und/oder SK2 bildet, umfasst gemäß einer bevorzugten Ausführungsform der Erfindung eine Polymermischung aus Acrylaten und Synthesekautschuken, wobei der Polymermischung ein oder mehrere Vernetzer sowie Klebrigmacher zugemischt sind.

Gemäß einer weiteren bevorzugten Ausführungsform enthält die Schicht SK1 oder die Schicht SK2 oder bevorzugt enthalten beide Schichten SK1 und SK2 ein Schwarzpigment wie Ruß. Besonders bevorzugt liegt der Anteil zwischen 0,1 Gew.-Teilen und 10 Gew.-Teilen bezogen auf die Gesamtzusammensetzung der jeweiligen Schicht.

## Schäumung und Ausgestaltung der selbstklebenden Acrylatmasse-Schichten

Erfindungsgemäß sind die Schichten SK1 und SK2 geschäumt.

Bevorzugt wird der Schaum durch das Einbringen und nachfolgende Expandieren von Mikroballons erhalten.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Geschäumte Schichten SK1 und SK2 können auch mit sogenannten vorexpandierten Mikroballons erzeugt werden. Erfindungsgemäß kann eine der Schichten SK1 oder SK2 oder beide Schichten SK1 und SK2 auf diese Weise geschäumt sein. Bei vorexpandierten Mikroballons findet eine Expansion schon vor der Einmischung in die Polymermatrix statt. Vorexpandierte Mikroballons sind beispielsweise unter der Bezeichnung Dualite® oder mit der Typenbezeichnung Expancel xxx DE yy (Dry Expanded) von der Firma Akzo Nobel kommerziell erhältlich."xxx" steht die Zusammensetzung der Mikroballonsabmischung. "yy" steht für die Größe der Mikroballons im expandierten Zustand.

Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Dieser Fall ist in der Figur 2 gezeigt. Hier ist ein Gradient in der Verteilung der Mikroballons zu sehen. Im oberen Bereich der Schaumschicht sind mehr und vor allem weiter expandierte Mikroballons als im unteren Bereich der Schaumschicht.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Schicht SK1 oder der Schicht SK2 oder bevorzugt beider Schichten SK1 und SK2 eingearbeitet. Erst nach dem Einarbeiten in die Schicht werden die Mikroballons expandiert.

Auf diese Weise ergibt sich eine gleichmäßigere Verteilung der Mikroballons in der Polymermatrix (siehe Figur 3). In der Figur 3 ist zu erkennen, dass sowohl im oberen als auch im unteren Bereich der Schaumschicht gleichweit expandierte Mikroballons vorhanden sind. Auch der Expansionsgrad der Mikroballons ist insgesamt ausgeglichener. Nahezu alle Mikroballons sind gleich expandiert.

Vorzugsweise werden die Mikroballons so gewählt, dass das Verhältnis der Dichte der Polymermatrix zu der Dichte der in die Polymermatrix einzuarbeitenden (nicht oder nur wenig vorexpandierten) Mikroballons zwischen 1 und 1:6, also:

$$\frac{\text{Dichte der Polymermatrix}}{\text{Dichte der einzuarbeitenden Mikroballons}} = 1 \; bis \; 1{,}6$$

liegt. Erst nach oder unmittelbar bei der Einarbeitung erfolgt dann die Expansion. Bei Lösungsmittelhaltigen Massen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Erfindungsgemäß bevorzugt weisen mindestens 90 % aller von Mikroballons gebildeten Hohlräume in der Schicht SK1 oder der Schicht SK2 oder bevorzugt beider Schickten SK1 und SK2 einen maximalen Durchmesser von 7 bis 200 µm, stärker bevorzugt von 10 bis 100 µm, ganz besonders bevorzugt von 10 bis 30 µm auf. Unter dem "maximalen Durchmesser" wird die maximale Ausdehnung eines Mikroballons in beliebiger Raumrichtung verstanden.

Sofern es sich bei der erfindungsgemäß verwendeten Haftklebemasse um eine mit einer Elastomerkomponente geblendete Acrylatmasse handelt, liegt die Größe der Elastomer-Domänen liegt in ihrer größten Ausdehnung typischerweise zwischen 0,5 µm und 150 µm, insbesondere zwischen 1 µm und 30 µm, siehe oben. In besonders bevorzugter Weise liegen dann der maximale Durchmesser der von mindestens 90 % aller von Mikroballons gebildeten Hohlräume und der maximale Durchmesser von mindestens 90 % der Domänen der Elastomerkomponente im selben Größenbereich unterhalb von 100 µm, insbesondere jeweils im Bereich zwischen 10 µm und 30 µm .

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons beider Schichten SK1 und SK2 liegt zwischen 0,5 und 3 Gew.-%, jeweils bezogen auf die Gesamtzusammensetzung (einschließlich eingemischter Mikroballons) der entsprechenden Schicht SK1 beziehungsweise SK2.

Die Angaben beziehen sich jeweils auf unexpandierte Mikroballons.

Eine expandierbare Mikrohohlkugeln enthaltende Polymermasse der Schicht SK1 oder der Schicht SK2 oder beider Schichten SK1 und SK2 darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die Schichten SK1 und SK2 sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons"). Auch die hier genannten Additive können entweder nur in einer der Schichten SK1 beziehungsweise SK2 oder in beiden Schichten SK1 und SK2 vorliegen.

Die absolute Dichte der geschäumten Schicht SK1 oder der Schicht SK2 oder bevorzugt beider Schichten SK1 und SK2 beträgt bevorzugt 350 bis 950 kg/m$^3$, stärker bevorzugt 450 bis 930 kg/m$^3$, insbesondere 570 bis 880 kg/m$^3$.

Die relative Dichte beschreibt das Verhältnis der Dichte der jeweils geschäumten Schicht zur Dichte der entsprechenden rezepturidentischen, ungeschäumten Schicht. Die relative Dichte der Schicht SK1 oder der Schicht SK2 oder bevorzugt beider Schichten SK1 und SK2 beträgt vorzugsweise 0,35 bis 0,99, stärker bevorzugt 0,45 bis 0,97, insbesondere 0,50 bis 0,90.

## Folienträger

Als Materialien für die Folie des - vorzugsweise nichtdehnbaren - Folienträgers F werden bevorzugt Polyester, insbesondere Polyethylenterephthalat (PET), Polyamid (PA), Polyimid (PI) oder mono- oder biaxial verstrecktes Polypropylen (PP) verwendet. Ebenfalls möglich ist auch die Verwendung von mehrschichtigen Laminaten oder Coextrudaten, insbesondere aus den vorgenannten Materialien.

Vorzugsweise ist der Folienträger einschichtig.

In sehr vorteilhafter Weise ist eine der Oberflächen oder sind beider Oberflächen der Folienträgerschicht physikalisch/und oder chemisch vorbehandelt, etwa durch Ätzung und/oder Coronabehandlung und/oder plasmabehandlung und/oder Primerung.

Um sehr gute Ergebnisse für die Aufrauhung zu erzielen, ist es zu empfehlen, als Reagenz zum Ätzen der Folie Trichloressigsäure ($Cl_3C$-COOH) oder Trichloressigsäure in Kombination mit inerten kristallinen Verbindungen, bevorzugt Siliziumverbindungen, besonders bevorzugt $[SiO_2]_x$, einzusetzen.

Sinn der inerten kristallinen Verbindungen ist, in die Oberfläche der Folie, insbesondere der PET-Folie, eingebaut zu werden, um auf diese Weise die Rauigkeit und die Oberflächenenergie zu verstärken.

Die Coronabehandlung ist ein chemisch- thermisches Verfahren zur Steigerung der Oberflächenspannung/Oberflächenenergie von polymeren Substraten. Zwischen zwei Elektroden werden in einer Hochspannungsentladung Elektronen stark beschleunigt, was zu einer Ionisierung der Luft führt. Wird ein Kunststoffsubstrat in die Bahn dieser beschleunigten Elektroden eingebracht, so schlagen die so erzeugten beschleunigten Elektroden mit 2 - 3-facher Energie auf die Substratoberfläche auf, wie sie notwendig wäre, um die molekularen Bindungen der meisten Substrate oberflächlich aufzubrechen. Dies führt zur Entstehung von gasförmigen Reaktionsprodukten und hoch reaktiven, freien Radikalen. Diese freien Radikale können in der Gegenwart von Sauerstoff und den Reaktionsprodukten rasch reagieren und bilden verschiedene chemische Funktionsgruppen auf der Substratoberfläche. Funktionsgruppen, die sich aus diesen Oxidationsreaktionen ergeben, tragen am stärksten dazu bei, die Oberflächenenergie zu steigern. Die Coronabehandlung kann mit Zweielektroden-, aber auch mit Einelektroden-Anlagen erfolgen.

Während der Coronavorbehandlung können (neben üblicher Luft) unterschiedliche Prozessgase wie Stickstoff zum Einsatz kommen, die eine Schutzgasatmosphäre ausbilden beziehungsweise die Coronavorbehandlung unterstützen.

Die Plasma-Behandlung - insbesondere Niederdruck-Plasmabehandlung - ist ein bekanntes Verfahren zur Oberflächen-vorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene.

Als Primer werden allgemein Beschichtungen oder Grundierungen bezeichnet, die insbesondere haftvermittelnde und/oder passivierende und/oder korrosionshemmende Wirkung besitzen. Im Rahmen der vorliegenden Erfindung kommt es insbesondere auf die haftvermittelnde Wirkung an. Haftvermittelnde Primer, oft auch Haftvermittler oder Adhesion Promoter genannt, sind vielfach in Form von kommerziellen Produkten oder aus der technischen Literatur bekannt.

Die Dicke der Folie liegt gemäß einer bevorzugten Ausführungsform zwischen 5 und 250 $\mu$m, vorzugsweise zwischen 6 und 120 $\mu$m, insbesondere zwischen 12 und 100 $\mu$m, ganz besonders zwischen 23 und 50 $\mu$m.

Vorzugsweise besteht die Folie aus Polyethylenterephthalat und weist eine Dicke zwischen 23 und 50 $\mu$m auf.

Eine geeignete Folie ist unter der Handelsbezeichnung Hostaphan ® RNK erhältlich. Diese Folie ist hochtransparent, biaxial orientiert und besteht aus drei coextrudierten Schichten.

Zur Herstellung der Folie kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Als nichtdehnbar im Sinne der vorliegenden Anmeldung gelten insbesondere solche Folien, die die nachfolgenden Werte für Zugfestigkeit und/oder Reißdehnung erfüllen (angegebene Werte in Bezug auf die weiter hinten angegebene Messmethode R1).

Die Zugfestigkeit der Folie liegt in Längs- und in Querrichtung jeweils bevorzugt bei größer 100 N/mm$^2$, vorzugsweise größer 150 N/mm$^2$. In sehr bevorzugter Weise liegt die Zugfestigkeit der Folie bei größer 100 N/mm$^2$, noch weiter vorzugsweise bei größer 180 N/mm$^2$ (in Längsrichtung) und bei größer 200 N/mm$^2$, noch weiter vorzugsweise bei größer 270 N/mm$^2$ (in Querrichtung).

Die Reißdehnung der Folie liegt bevorzugt bei kleiner 300 %, vorzugsweise kleiner 200 % (in Längsrichtung) und bei kleiner 300 %, vorzugsweise kleiner 120 % (in Querrichtung), wobei diese Werte unabhängig von den für die Zugfestigkeit angegebenen oder gleichzeitig realisiert sein können.

Die Folie bestimmt maßgeblich die Zugfestigkeit beziehungsweise Reißdehnung des Haftklebestreifens. Vorzugsweise weist der Haftklebestreifen die gleichen Werte für Zugfestigkeit und Reißdehnung auf, wie sie oben angegeben sind.

## Herstellung und Ausgestaltung des Haftklebestreifens

Die Herstellung und Verarbeitung der Haftklebemassen kann sowohl aus der Lösung als auch aus der Schmelze erfolgen. Das Aufbringen der Haftklebemassen kann durch direkte Beschichtung oder durch Laminierung, insbesondere Heißlaminierung erfolgen.

Vorzugsweise liegt die Dicke der Selbstklebemassenschichten SK1 und SK2 jeweils zwischen 10 bis 500 µm.

Vorteilhaft können die äußeren, frei liegenden Flächen der außenliegenden Klebemassenschichten SK1 und/oder SK2 des erfindungsgemäßen Haftklebebstreifens mit beidseitig antiadhäsiv beschichteten Materialien ausgerüstet sein wie ein Trennpapier oder eine Trennfolie, auch Liner genannt, und zwar als temporärer Träger.

Ein Liner (Trennpapier, Trennfolie) ist nicht Bestandteil eines Klebebandes, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden.

Typische Konfektionierformen der erfindungsgemäßen Haftklebestreifen sind Klebebandrollen sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden. Diese Verbindung kann durch die Vorbehandlung der Folienoberflächen optimiert werden.

Der allgemeine Ausdruck "Klebestreifen" (Haftklebesteifen), synonym auch "Klebeband" (Haftklebeband), umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Der Haftklebestreifen weist somit eine Längsausdehnung (x-Richtung) und eine Breitenausdehnung (y-Richtung) auf. Der Haftklebestreifen weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Haftklebestreifens möglichst gleich, vorzugsweise exakt gleich.

Der erfindungsgemäße Haftklebestreifen liegt insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleich bleibend ausgebildet ist.

Der Haftklebestreifen, insbesondere in Bahnform, kann in Form einer Rolle, also in Form einer archimedischen Spirale auf sich selbst aufgerollt, hergestellt werden.

Der dreischichtige Haftklebestreifen (also ohne Berücksichtigung eventuell vorgesehener Liner) weist vorzugsweise eine Dicke auf von 20 µm bis 6000 µm, weiter vorzugsweise von 30 bis 500 µm, besonders vorzugsweise von 45 bis 350 µm.

**Vernetzung der Klebemassenschichten**

Die Schicht SK1 aus einer selbstklebenden Masse oder die Schicht SK2 aus einer selbstklebenden Masse oder bevorzugt beide Schichten SK1 und SK2 liegen in dem erfindungsgemäßen Haftklebestreifen sehr bevorzugt vernetzt vor. Die Vernetzung findet dabei bevorzugt an der zur Schicht beziehungsweise zum Film ausgebildeten Haftklebemasse statt.

Die Vernetzungsreaktion kann dabei insbesondere wie folgt ablaufen:
In einer vorteilhaften Vorgehensweise werden die beiden Substanzen als Reinstoff oder in einem geeigneten Lösemittel vorgelöst zu dem in Lösung vorliegenden Polymer gegeben, dann das Polymer mit den Vernetzern gut durchgemischt, auf einen temporären oder permanenten Träger beschichtet und dann unter geeigneten Bedingungen getrocknet, wobei die Vernetzung stattfindet.

In einer optionalen, insbesondere für sehr reaktive Systeme geeigneten Vorgehensweise wird zunächst einer der Vernetzer in Reinform oder vorgelöst zu der Polymerlösung gegeben. Der zweite Vernetzer wird erst kurz vor der Beschichtung zugeführt, zum Beispiel über eine Inline-Dosierung mit nachgeschaltetem aktiven oder statischem Mischer und anschließender Beschichtung und Trocknung.

Die Topfzeit (Verarbeitungszeit) der koordinativen Vernetzer kann durch Zugabe der zuvor beschriebenen Liganden zu der Polymer-Vernetzer-Lösung erhöht werden. Der Ligandenüberschuss wird dann bei der Trocknung entfernt; erst ab dann sind die koordinativen Vernetzer (voll) reaktiv.

Die Trocknungsbedingungen (Temperatur und Verweilzeit) werden sehr bevorzugt so gewählt, dass nicht nur das Lösungsmittel entfernt wird, sondern auch die Vernetzung auch zu einem Großteil abgeschlossen ist, so dass ein stabiles Vernetzungsniveau - insbesondere bei höheren Temperaturen - erreicht wird. Insbesondere wird die Klebemasse vollständig vernetzt.

Unter vollständiger Vernetzung einer Klebemasse wird erfindungsgemäß verstanden, dass deren maximale Scherstrecke "max" im Mikroscherweg-Test bei den dort genannten Bedingungen bei wiederholter (beispielweise täglicher) Mikroscherweg-Messung innerhalb einer Periode von 48 Stunden nur im Rahmen der Genauigkeit der Messmethode (etwa bis zu maximal 5 %) ändert, wenn die Klebmasse bei Raumtemperatur (23 °C) bei ansonsten Normbedingungen gelagert wird.

Der Nachweis der vollständigen Vernetzung kann je nach Anwendungsgebiet der Klebemasse auch für andere Temperaturen (zum Beispiel 40 °C, insbesondere solchen Temperaturen, die den jeweiligen Anwendungstemperaturen entsprechen) durchgeführt werden.

In vorteilhafter Weise kann der erfindungsgemäße Haftklebestreifen zum Verkleben von Bauteilen feinmechanischer, optischer, elektrischer und/oder elektronischer Geräte eingesetzt werden, zum Beispiel bei deren Herstellung, Reparatur, Verzierung oder dergleichen. Dabei können beispielsweise Materialien wie Kunststoffe, Gläser, Metalle und dergleichen zur Verklebung kommen.

Der erfindungsgemäße Haftklebestreifen eignet sich insbesondere auch zur permanenten Verklebung von flexiblen Materialien, insbesondere bei der Herstellung flexibler Displays. Solche Displays nehmen an Bedeutung zu.

In vorteilhafter Weise kann der erfindungsgemäße Haftklebestreifen zum Verkleben von Fenstern oder Linsen in Gehäusen feinmechanischer, optischer und/oder elektronischer Geräte (sogenanntes "Lens Mounting") eingesetzt werden. Dabei ist zumindest eines der starren oder flexiblen Substrate durchsichtig (transparent) oder durchscheinend (transluzent). Das durchsichtige beziehungsweise durchscheinende Substrat kann beispielweise ein Fenster oder eine optische Linse zum Zwecke des Schutzes darunter angeordneter empfindlicher Komponenten - solche Komponenten können beispielweise Flüssigkristallanzeigen (LCD), Leuchtdioden (LED) oder organische Leuchtdioden (OLED) von Displays, aber auch gedruckte Schaltungen oder andere empfindliche elektronische Bauteile sein; dies spielt beispielweise bei der Anwendung für berührungsempfindliche Displays eine große Rolle - und/oder zur Bewirkung optischer Effekte für die Funktion des Gerätes - zum Beispiel Lichtbrechung, Lichtbündelung, Lichtabschwächung, Lichtverstärkung usw. - sein.

Sehr vorteilhaft wird das transparente Substrat derart gewählt, dass es einen Haze-Wert von höchstens 50 %, bevorzugt von nicht mehr als 10 %, sehr bevorzugt von nicht mehr als 5 % (gemessen nach ASTM D 1003) aufweist.

Das zweite Substrat ist vorzugsweise ebenfalls ein Bauteil eines feinmechanischen, optischen und/oder elektronischen Gerätes. Insbesondere ist hier an Gehäuse solcher Geräte oder an Halterungen für wie vorstehend beschriebene Fenster beziehungsweise Linsen zu denken.

In einer bevorzugten Vorgehensweise ist das durchsichtige beziehungsweise durchscheinende Substrat ein Substrat aus Glas, Polymethylmethacrylat und/oder Polycarbonat.

Insbesondere kann das zweite Substrat aus Kunststoffen wie Acrylnitril-Butadien-Styrol-Copolymeren (ABS), Polyamid oder Polycarbonat bestehen, die insbesondere auch glasfaserverstärkt sein können; oder aus Metallen, wie Aluminium - auch anodisiertes (eloxiertes) Aluminium - oder Magnesium und Metalllegierungen

Auch den Substrat-Materialien können Additive, wie beispielsweise Farbstoffe, Lichtschutzmittel, Alterungsschutzmittel, Weichmacher oder dergleichen beigemischt sein, sofern dies für den beabsichtigten Einsatzzweck vorteilhaft ist; bei durchsichtigen oder durchscheinenden Materialien insbesondere insoweit, als es diese optischen Eigenschaften nicht oder nur in vertretbarem Maße stört.

Erfindungsgemäß ist der erfindungsgemäße Verbund somit ein Bauteil eines elektronischen, optischen oder feinmechanischen Geräts, wie es in der obigen Tabelle angeführt ist.

### Vorteilhafte Ausgestaltungen des erfindungsgemäßen Haftklebestreifens

Anhand der nachfolgend beschriebenen Figuren sowie Beispielen werden besonders vorteilhafte Ausführungen der Erfindung näher erläutert, ohne damit die Erfindung unnötig einschränken zu wollen.

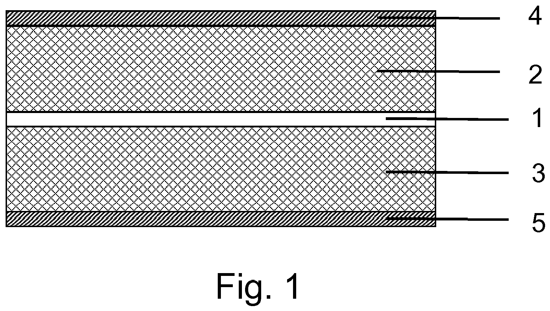

In Figur 1 ist der schematische Aufbau eines erfindungsgemäße dreischichtigen Haftklebstreifen aus drei Schichten 1, 2, 3 als Querschnitt dargestellt.

Der Streifen umfasst einen nichtdehnbaren Folienträger 1 (Schicht F) in Form einer beidseitig geätzten PET-Folie.

Auf der Oberseite und auf der Unterseite der PET-Folie 1 sind zwei außenliegende selbstklebende Klebemassenschichten2, 3 (Schicht SK1 und Schicht SK2) vorhanden. Die selbstklebenden Klebemassenschichten 2, 3 (Schichten SK1 und SK2) sind in der dargestellten beispielhaften Ausführung ihrerseits jeweils mit einem Liner 4, 5 eingedeckt.

In einem erfindungsgemäßen Herstellungsverfahren werden alle Bestandteile der Klebemasse in einem Lösemittelgemisch (Benzin/Toluol/Aceton) aufgelöst. Die Mikroballons wurden in Benzin angeschlämmt und in die gelöste Klebemasse eingerührt. Hierzu können grundsätzlich die bekannten Compoundier- und Rühreinheiten eingesetzt werden, wobei darauf zu achten ist, dass die Mikroballons bei der Vermischung noch nicht expandieren. Sobald die Mikroballons homogen in der Lösung verteilt sind, kann die Klebemasse beschichtet werden, wobei wiederum Beschichtungssysteme gemäß des Standes der Technik eingesetzt werden können. Beispielsweise kann die Beschichtung durch einen Rakel auf einen konventionellen PET-Liner geschehen. Im nächsten Schritt wird die so hergestellte Klebmassenschicht bei 100 °C für 15 min getrocknet.

In keinem der vorgenannten Schritte kommt es zu einer Expansion der Mikroballons.

Auf die freie Oberfläche der so hergestellten und getrockneten Klebmassenschicht wird die nichtdehnbare Folienschicht F kaschiert. Auf deren zweite Oberfläche wird die freie Oberfläche einer zweiten derart hergestellten, ebenfalls getrockneten Klebmassenschicht kaschiert, so dass ein ungeschäumter Dreischichtverbund aus der innenliegenden Folienschicht und zwei mit Linern versehenen Klebemassenschichten resultiert. Alternativ kann die Folienschicht F direkt mit den mit Mikroballons versehenen, ungeschäumten Klebemassen gleichzeitig oder nacheinander beschichtet werden, woraufhin diese noch offenliegenden Klebmassenschichten bei 100 °C für 15 min getrocknet und dann mit Linern abgedeckt werden, so dass der ungeschäumte Dreischichtverbund resultiert.

Nach dem Trocknen werden die Klebeschichten in einem passenden Temperatur-ZeitFenster, etwa für 5 min bei 150 °C oder für 1 min bei 170 °C, im Ofen geschäumt, und zwar abgedeckt zwischen den zwei Linern, um eine besonders glatte Oberfläche zu erzeugen.

Die so erzeugte Oberfläche weist eine Rauigkeit $R_a$ kleiner 15 μm, besonders bevorzugt kleiner 10 μm auf, ganz besonders bevorzugt von kleiner 3 μm auf.

Die Oberflächenrauigkeit ist vorzugsweise $R_a$ ist eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs. Gemessen wird diese mittels Lasertriangulation.

Die Expansionstemperatur wird insbesondere höher als Trocknungstemperatur gewählt, um die Expansion der Mikroballons bei der Trocknung zu vermeiden.

## Eigenschaften der erfindungsgemäßen Haftklebestreifen

Die erfindungsgemäßen Haftklebestreifen zeichnen sich durch ein hervorragendes Anwendungsprofil aus, die die Anforderungen der erfindungsgemäß gestellten Aufgabe hervorragend erfüllen. Dabei hat sich herausgestellt, dass insbesondere das Schockabsorptionsvermögen besser ist als bei den Produkten des Standes der Technik, insbesondere auch in Hinblick auf gleich dicke Vierschichtprodukte aus PET-Träger, geschäumter innenliegender Schicht und außenliegenden Haftklebemassenschichten.

Nachfolgend wird die Erfindung durch einige Beispiele näher erläutert.

## Beispiele

## Basispolymere, Abmischungen

Im Folgenden wird die Präparation des Ausgangspolymers und der daraus hergestellten Abmischungen mit Mikroballons beschrieben. Die untersuchten Polymere werden konventionell über eine freie radikalische Polymerisation in Lösung hergestellt.

Basispolymer P1

Ein für radikalische Polymerisationen konventioneller Reaktor wurde mit 47,5 kg 2-Ethylhexylacrylat, 47,5 kg n-Butylacrylat, 5 kg Acrylsäure und 66 kg Benzin/Aceton (70/30) befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Benzin/Aceton Gemisch verdünnt.

Nach 5,5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat ein mittleres Molekulargewicht von $M_w$ = 386.000 g/mol, Polydispersität PD (Mw/Mn) = 7,6.

Beispiel Haftklebmasse B1

Es wird eine Mischung hergestellt, umfassend 42,425 Gew.-%, bezogen auf das Trockengewicht des Polymers, das Basispolymer P1, 37,5 Gew.-% das Harz Dertophene T sowie 20 Gew.-% Kraton D 1118. Durch die Zugabe von Benzin wird ein Feststoffgehalt von 38 % eingestellt. Die Mischung aus Polymer und Harz wird solange gerührt bis sich das Harz sichtbar vollständig gelöst hat. Im Anschluss werden 0,075 Gew. % des kovalenten Vernetzers Erysis GA 240 (N,N,N',N'-tetrakis(2,3-epoxypropyl)-m-xylen-a,a'-diamin der Firma Emerald Performance Materials, CAS NO. 63738-22-7) zugegeben. Die Mischung wird für 15 Minuten bei Raumtemperatur gerührt.

Währenddessen werden zur Herstellung der Abmischungen 1, 2, 3 9 und 10 die in Tabelle 2 angegebenen Mengen Mikroballons (Expancel 920 DU20) hinzugefügt.

Beispiel Haftklebmasse B2

Es wird eine Mischung hergestellt, umfassend 42,34 Gew.-%, bezogen auf das Trockengewicht des Polymers, das Basispolymer P1, 35,25 Gew.-% das Harz Dertophene T sowie 17 Gew.-% Kraton D 1118. Durch die Zugabe von Benzin wird ein Feststoffgehalt von 38 % eingestellt. Die Mischung aus Polymer und Harz wird solange gerührt bis sich das Harz sichtbar vollständig gelöst hat. Im Anschluss werden 0,035 Gew. % des kovalenten Vernetzers Erysis GA 240 (ein tetrafunktionales Epoxidharz basierend auf meta-Xylendiamin, CAS NO. 63738-22-7) und 0,075 Gew. % Al-Chelat zugegeben. Die Mischung wird für 15 Minuten bei Raumtemperatur gerührt.
Währenddessen werden 1,25 Gew.-% Mikroballons (Expancel 920 DU20) sowie 3 Gew.-% Hostatint hinzugefügt (Herstellung der Abmischung 4).

Beispiel Haftklebmasse B3

Es wird eine Mischung hergestellt, umfassend 29,925 Gew.-%, bezogen auf das Trockengewicht des Polymers, das Basispolymer P1, 30 Gew.-% das Harz Dertophene T sowie 40 Gew.-% Kraton D 1118. Durch die Zugabe von Benzin wird ein Feststoffgehalt von 38 % eingestellt. Die Mischung aus Polymer und Harz wird solange gerührt bis sich das Harz sichtbar vollständig gelöst hat. Im Anschluss werden 0,075 Gew. % des kovalenten Vernetzers Erysis GA 240 (ein tetrafunktionales Epoxidharz basierend auf meta-Xylendiamin, CAS NO. 63738-22-7) zugegeben. Die Mischung wird für 15 Minuten bei Raumtemperatur gerührt.
Währenddessen werden zur Herstellung der Abmischungen 5 bis 8 die in Tabelle 2 angegebenen Mengen Mikroballons (Expancel 920 DU20) hinzugefügt.

Beispiel Haftklebmasse B4

Es wird eine Mischung hergestellt, umfassend 42,34 Gew.-%, bezogen auf das Trockengewicht des Polymers, das Basispolymer P1, 35,25 Gew.-% das Harz Dertophene T sowie 17 Gew.-% Kraton D 1118. Durch die Zugabe von Benzin wird ein Feststoffgehalt von 38 % eingestellt. Die Mischung aus Polymer und Harz wird solange gerührt bis sich das Harz sichtbar vollständig gelöst hat. Im Anschluss werden 0,035 Gew. % des kovalenten Vernetzers Erysis GA 240 (ein tetrafunktionales Epoxidharz basierend auf meta-Xylendiamin, CAS NO. 63738-22-7) und 0,075 Gew. % Al-Chelat zugegeben. Die Mischung wird für 15 Minuten bei Raumtemperatur gerührt.
Währenddessen werden zur Herstellung der Abmischungen 11 bis 14 die in Tabelle 2 angegebenen Mengen Mikroballons (Expancel 920 DU20) hinzugefügt.

- Kraton 1118 Styrol-Butadien-Styrol-Blockcopolymer der Firma Kraton Polymers 78 Gew.-% 3-Block, 22 Gew.-% 2-Block; Blockpolystyrolgehalt: 33 Gew.-% (Molekulargewicht $M_w$ des 3-Blockanteils von 150.000 g/mol)
- Dertophene T Terpenphenolharz (Erweichungspunkt 110 °C; $M_w$ = 500 bis 800 g/mol; D = 1,50), DRT resins, 25359-84-6
- Al-Chelat: Al-(III)-acetylacetonat (Firma Sigma Aldrich)
- Expancel 920 DU20 Mikroballons
- Hostatint Schwarzpigment der Firma Clariant

*Tabelle 1*

| | Haftklebemasse 1 | Haftklebemasse 2 | Haftklebemasse 3 | Haftklebemasse 4 |
|---|---|---|---|---|
| Rohstoff | Anteil (Gew.-%) | Anteil (Gew.-%) | Anteil (Gew.-%) | Anteil (Gew.-%) |
| Acrylat | 42,425 | 42,39 | 29,925 | 59,925 |
| Kraton 1118 | 20 | 20 | 40 | - |
| Dertophene T | 37,5 | 37,5 | 30 | 40 |
| Erysis GA 240 | 0,075 | 0,035 | 0,075 | 0,075 |
| AL-Chelat | - | 0,075 | - | - |
| Summe | 100 | 100 | 100 | 100 |

*Tabelle 2*

| | Basismasse | Mikroballons * | Schwarzpigment * |
|---|---|---|---|
| Abmischung 1 | Haftklebemasse 1 | 2,3 Gew.-% | - |
| Abmischung 2 | Haftklebemasse 1 | 1,25 Gew.-% | - |
| Abmischung 3 | Haftklebemasse 1 | 0,8 Gew.-% | - |
| Abmischung 4 | Haftklebemasse 2 | 1,25 Gew.-% | 3 Gew.-% |
| Abmischung 5 | Haftklebemasse 3 | 0,8 Gew.-% | - |
| Abmischung 6 | Haftklebemasse 3 | 1,5 Gew.-% | - |
| Abmischung 7 | Haftklebemasse 3 | 2,3 Gew.-% | - |
| Abmischung 8 | Haftklebemasse 3 | 3,5 Gew.-% | - |
| Abmischung 9 | Haftklebemasse 1 | 1,5 Gew.-% | - |
| Abmischung 10 | Haftklebemasse 1 | 3,5 Gew.-% | - |
| Abmischung 11 | Haftklebemasse 4 | 0,8 Gew.-% | - |
| Abmischung 12 | Haftklebemasse 4 | 1,2 Gew.-% | - |
| Abmischung 13 | Haftklebemasse 4 | 2,3 Gew.-% | - |
| Abmischung 14 | Haftklebemasse 4 | 3,5 Gew.-% | - |
| * Mengenangaben bezogen auf jeweils 100 Gew.-% abgemischte Klebemasse (aus Basismasse, Mikroballons und sofern vorhanden Schwarzpigment) | | | |

**Herstellung der Haftklebestreifen**

Die jeweiligen Abmischungen zur Herstellung der mikroballonhaltigen Schicht wird mit dem gewünschten Flächengewicht (vergleiche Tabelle 3) auf einen Prozessliner (silikonisierte Folie) beschichtet. Die so erhaltenen Schichten werden getrocknet (100 °C für 15 min) und als Schichten SK1 und SK2 für die Haftklebebänder verwendet.

Dreischichtige symmetrische Haftklebebänder (Beispiele 1 bis 28, Vergleichsbeispiele 3 und 4) werden dabei erhalten, indem die jeweiligen - auf dem Prozessliner vorliegenden, noch ungeschäumten - Schichten SK1 und SK2 mit ihren jeweils freiliegenden Haftklebemassenflächen auf die beiden vorbehandelten Oberflächen einer PET-Folie kaschiert werden (Vorbehandlung der Oberflächen gemäß der Angaben in Tabelle 3; "corona" steht dort abkürzend für die Coronavorbehandlung)).

Danach findet der Schäumungsschritt mit dem so erhaltenen Verbund statt, wobei beide Schichten SK1 und SK2 gleichzeitig schäumen.

Vierschichtige Vergleichshaftklebebänder (Vergleichsbeispiele 1 und 2) werden erhalten, indem eine getrocknete, mikroballonhaltige Klebmassenschicht (gemäß Angaben in Tabelle 3) mit ihrer freien Haftklebeoberfläche auf eine beidseitig geätzte PET-Folie kaschiert wird. Danach wird auf die außenliegenden Oberflächen des so erhaltenen Verbundes aus PET-Folie und mikroballonhaltiger Schicht jeweils eine auf einem Prozessliner vorliegende und gegebenenfalls getrocknete Schicht der außenliegenden Haftklebemassen zukaschiert.

Der letzte Schritt der jeweiligen Klebestreifenherstellung beinhaltet die Schäumung der zu schäumenden Schichten des jeweiligen Haftklebestreifens durch die Einwirkung von warmer Luft (ca. 170 °C) für ungefähr eine Minute.

Je nach Erfordernis werden einer oder beide der äußeren Liner für die Untersuchungen wieder entfernt.

Nach den vorgenannten Verfahren werden folgende Haftklebestreifen entsprechend Tabelle 3 hergestellt:

*Tabelle 3*

| **Beispiel** | **Schichtenabfolge** | **Gesamtdicke (nach Schäumung)** |
|---|---|---|
| Beispiel 1 | 41 g/m$^2$ Abmischung 1<br>23 μm corona PET<br>41 g/m$^2$ Abmischung 1 | 150 μm |

(fortgesetzt)

| Beispiel | Schichtenabfolge | Gesamtdicke (nach Schäumung) |
|---|---|---|
| Beispiel 2 | 90 g/m$^2$ Abmischung 1<br>23 µm corona PET<br>90 g/m$^2$ Abmischung 1 | 300 µm |
| Beispiel 3 | 54 g/m$^2$ Abmischung 3<br>23 µm corona PET<br>54 g/m$^2$ Abmischung 3 | 150 µm |
| Beispiel 4 | 44 g/m$^2$ Abmischung 7<br>23 µm geätzte PET<br>44 g/m$^2$ Abmischung 7 | 150 µm |
| Beispiel 5 | 98 g/m$^2$ Abmischung 7<br>23 µm geätzte PET<br>98 g/m$^2$ Abmischung 7 | 300 µm |
| Beispiel 6 | 54 g/m$^2$ Abmischung 5<br>23 µm geätzte PET<br>54 g/m$^2$ Abmischung 5 | 150 µm |
| Beispiel 7 | 38 g/m$^2$ Abmischung 5<br>23 µm geätzte PET<br>38 g/m$^2$ Abmischung 5 | 110 µm |
| Beispiel 8 | 33 g/m$^2$ Abmischung 6<br>23 µm geätzte PET<br>33 g/m$^2$ Abmischung 6 | 110 µm |
| Beispiel 9 | 30 g/m$^2$ Abmischung 7<br>23 µm geätzte PET<br>30 g/m$^2$ Abmischung 7 | 110 µm |
| Beispiel 10 | 25 g/m$^2$ Abmischung 8<br>23 µm geätzte PET<br>25 g/m$^2$ Abmischung 8 | 110 µm |
| Beispiel 11 | 94 g/m$^2$ Abmischung 1<br>23 µm geätzte PET<br>94 g/m$^2$ Abmischung 1 | 300 µm |
| Beispiel 12 | 43 g/m$^2$ Abmischung 1<br>23 µm geätzte PET<br>43 g/m$^2$ Abmischung 1 | 150 µm |
| Beispiel 13 | 56 g/m$^2$ Abmischung 3<br>23 µm geätzte PET<br>56 g/m$^2$ Abmischung 3 | 150 µm |
| Beispiel 14 | 94 g/m$^2$ Abmischung 7<br>23 µm geätzte PET<br>94 g/m$^2$ Abmischung 7 | 300 µm |
| Beispiel 15 | 43 g/m$^2$ Abmischung 7<br>23 µm geätzte PET<br>43 g/m$^2$ Abmischung 7 | 150 µm |
| Beispiel 16 | 56 g/m$^2$ Abmischung 5<br>23 µm geätzte PET<br>56 g/m$^2$ Abmischung 5 | 150 µm |

(fortgesetzt)

| Beispiel | Schichtenabfolge | Gesamtdicke (nach Schäumung) |
|---|---|---|
| Beispiel 17 | 51 g/m$^2$ Abmischung 2<br>23 μm geätzte PET<br>51 g/m$^2$ Abmischung 2 | 150 μm |
| Beispiel 18 | 100 g/m$^2$ Abmischung 2<br>50 μm geätzte PET<br>100 g/m$^2$ Abmischung 2 | 300 μm |
| Beispiel 19 | 51 g/m$^2$ Abmischung 4<br>23 μm geätzte PET<br>51 g/m$^2$ Abmischung 4 | 150 μm |
| Beispiel 20 | 100 g/m$^2$ Abmischung 4<br>50 μm geätzte PET<br>100 g/m$^2$ Abmischung 4 | 300 μm |
| Beispiel 21 | 40 g/m$^2$ Abmischung 3<br>6 μm geätzte PET<br>40 g/m$^2$ Abmischung 3 | 100 μm |
| Beispiel 22 | 36 g/m$^2$ Abmischung 9<br>6 μm geätzte PET<br>36 g/m$^2$ Abmischung 9 | 100 μm |
| Beispiel 23 | 30 g/m$^2$ Abmischung 1<br>6 μm geätzte PET<br>30 g/m$^2$ Abmischung 1 | 100 μm |
| Beispiel 24 | 27 g/m$^2$ Abmischung 10<br>6 μm geätzte PET<br>27 g/m$^2$ Abmischung 10 | 100 μm |
| Beispiel 25 | 40 g/m$^2$ Abmischung 11<br>6 μm geätzte PET<br>40 g/m$^2$ Abmischung 11 | 100 μm |
| Beispiel 26 | 36 g/m$^2$ Abmischung 12<br>6 μm geätzte PET<br>36 g/m$^2$ Abmischung 12 | 100 μm |
| Beispiel 27 | 30 g/m$^2$ Abmischung 13<br>6 μm geätzte PET<br>30 g/m$^2$ Abmischung 13 | 100 μm |
| Beispiel 28 | 27 g/m$^2$ Abmischung 14<br>6 μm geätzte PET<br>27 g/m$^2$ Abmischung 14 | 100 μm |
| Vergleichsbeispiel 1 | 30 g/m$^2$ Haftklebmasse 2$^{\#}$<br>23 μm geätzte PET<br>50 g/m$^2$ Abmischung 1<br>30 g/m$^2$ Haftklebmasse 2$^{\#}$ | 150 μm |
| Vergleichsbeispiel 2 | 75 g/m$^2$ Klebmasse 2$^{\#}$<br>23 μm geätzte PET<br>86 g/m$^2$ Abmischung 1<br>75 g/m$^2$ Klebmasse 2$^{\#}$ | 300 μm |

(fortgesetzt)

| Beispiel | Schichtenabfolge | Gesamtdicke (nach Schäumung) |
|---|---|---|
| Vergleichsbeispiel 3 | 47 g/m² Haftklebemasse 4#<br>6 µm geätzte PET<br>47 g/m² Haftklebemasse 4# | 100 µm |
| Vergleichsbeispiel 4 | 47 g/m² Haftklebemasse 1#<br>6 µm geätzte PET<br>47 g/m² Haftklebemasse 1# | 100 µm |
| Vergleichsbeispiel 5 | 44 g/m² Haftklebemasse 1#<br>23 µm geätzte PET<br>44 g/m² Haftklebemasse 1# | 110 µm |
| # Haftklebmassen ohne Abmischung mit Mikroballons | | |

Alle eingesetzten (geätzten bzw. coronabehandelten) PET-Folien hatten Zugfestigkeiten in Längsrichtung von mehr als 180 N/mm² und in Querrichtung von mehr als 200 N/mm². Alle eingesetzten PET-Folien hatten zudem Reißdehnungswerte in Längsrichtung von weniger als 200 %, in Querrichtung von weniger als 120 %. Dabei wurden die Zugfestigkeiten und Reißdehnungen jeweils ermittelt nach Methode R1.

Referenzmethoden

Alle Messungen wurden, sofern nichts anderes angegeben ist, bei 23 °C und 50 % rel. Luftfeuchtigkeit durchgeführt.

*Reißdehnung und Zugfestigkeit (Methode R1)*

Die Reißdehnung und die Zugfestigkeit wurden in Anlehnung an DIN 53504 unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

*Klebharzerweichungstemperatur (Methode R2)*

Die Klebharzerweichungstemperatur wird nach der einschlägigen Methodik durchgeführt, die als Ring & Ball bekannt ist und nach ASTM E28 standardisiert ist.

*Gelpermeationschromatographie GPC (Methode R3)*

Die Angaben des Zahlenmittels der Molmasse Mn, des gewichtsmittleren Molekulargewichtes $M_W$ und der Polydispersität PD beziehen sich auf die Bestimmung per Gelpermeationschromatographie. Die Bestimmung erfolgt an 100 µL klarfiltrierter Probe (Probenkonzentration 1 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, $10^3$ Å, ID 8,0 mm x 50 mm verwendet. Zur Auftrennung werden die Säulen des Typs PSS-SDV, 5 µ, $10^3$ Å sowie 105 Å und 106 Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung) beziehungsweise bei (Synthese-)Kautschuken gegen Polystyrol.

*Dichte (Methode R4)*

Die Dichte der ungeschäumten und der geschäumten Klebemassenschichten wird ermittelt durch Quotientenbildung aus Masseauftrag und Dicke der auf einen Träger oder Liner aufgetragenen Klebemassenschicht. Der Masseauftrag kann durch Bestimmung der Masse eines bezüglich seiner Länge und seiner Breite definierten Abschnitts einer solchen auf einen Träger oder Liner aufgetragenen Klebemassenschicht, abzüglich der (bekannten oder separat ermittelbaren) Masse eine Abschnitts gleicher Dimensionen des verwendeten Trägermaterials bestimmt werden.

Die Dicke der Schicht lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Statische Glasübergangstemperatur $T_g$ (Methode R5)*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

*Mikroschertest*

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13 mm · 10 mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 300 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in µm angegeben, und zwar als Maximalwert ["max"; maximale Scherstrecke durch 15 minütige Belastung]; als Minimalwert ["min"; Scherstrecke ("Restauslenkung") nach 15 min Entlastung; bei Entlastung erfolgt eine Rückbewegung durch Relaxation]. Angegeben wird ebenfalls der elastische Anteil in Prozent ["elast"; elastischer Anteil = (max - min)·100 / max].

Prüfmethoden

Alle Messungen wurden, sofern nichts anderes angegeben ist, bei 23 °C und 50 % rel. Luftfeuchtigkeit durchgeführt.

*Kugelfalltest (Schlagzähigkeit, Ball drop) (Methode P1)*

Aus dem zu untersuchenden Klebeband wurde eine quadratische, rahmenförmige Probe ausgeschnitten (Außenmaße 33 mm x 33 mm; Stegbreite 3,0 mm; Innenmaße (Fensterausschnitt) 27 mm × 27 mm). Diese Probe wurde auf einen ABS-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des doppelseitigen Klebebands wurde ein PMMA-Fenster von 35 mm × 35 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 360 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagerecht ausgerichtet war und die PMMA-Scheibe frei hängend nach unten zeigte. Auf die so angeordnete Probe wurde senkrecht aus einer Höhe von bis zu 250 cm (durch das Fenster des ABS-Rahmens hindurch) eine Stahlkugel (Gewicht 5,6 g beziehungsweise 32,6 g) zentriert auf die PMMA-Scheibe fallen gelassen (Messbedingungen 23 °C, 50 % relative Feuchte). Mit jeder Probe wurden drei Untersuchungen durchgeführt, sofern die PMMA-Scheibe sich nicht vorher gelöst hatte.

Der Kugelfalltest gilt als bestanden, wenn sich die Verklebung bei keiner der drei Untersuchungen gelöst hat.

Um Versuche mit unterschiedlichen Kugelgewichten vergleichen zu können, wurde die Energie wie folgt berechnet:

$$E = \text{Höhe [m]} * \text{Kugelgewicht [kg]} * 9{,}81\ m/s^2$$

*Push-out-Festigkeit (z-Ebene) (Methode P2)*

Mittels des Push-Out-Tests lassen sich Aussagen darüber gewinnen, wie hoch die Beständigkeit einer Verklebung eines Bauteils in einem rahmenförmigen Körper ist, etwa eines Fensters in einem Gehäuse.

Aus dem zu untersuchenden Klebeband wurde eine rechteckige, rahmenförmige Probe ausgeschnitten (Außenmaße 43 mm × 33 mm; Stegbreite jeweils 2,0 mm, Innenmaße (Fensterausschnitt) 39 mm × 29 mm, Klebefläche auf Ober- und Unterseite jeweils 288 mm$^2$). Diese Probe wurde auf einen rechteckigen ABS-Kunststoffrahmen (ABS = AcrylnitrilButadien-Styrol-Copolymere) (Außenmaße 50 mm × 40 mm, Stegbreite der langen Stege jeweils 8 mm; Stegbreite der kurzen Stege jeweils 10 mm; Innenmaße (Fensterausschnitt) 30 mm × 24 mm; Dicke 3 mm) geklebt. Auf die andere Seite der Probe des doppelseitigen Klebebandes wurde eine rechteckige PMMA-Scheibe (PMMA = Polymethylmethacrylat) mit den Dimensionen 45 mm × 35 mm geklebt. Die volle zur Verfügung stehende Klebefläche des Klebebandes wurde genutzt. Die Verklebung von ABS-Rahmen, Klebebandprobe und PMMA-Fenster erfolgte derart, dass die geometrischen Zentren, die Winkelhalbierenden der spitzen Diagonalenwinkel und die Winkelhalbierenden der stumpfen Diagonalenwinkel der Rechtecke jeweils übereinanderlagen (Eck-auf-Eck, lange Seiten an lange Seiten, kurze Seiten an kurze Seiten). Die Verklebungsfläche betrug 288 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagerecht ausgerichtet war und die PMMA-Scheibe frei hängend nach unten zeigte.

Ein Druckstempel wird nun mit einer konstanten Geschwindigkeit von 10 mm/min senkrecht von oben durch das Fenster des ABS-Rahmens bewegt, so dass er zentral auf die PMMA-Platte drückt, und die jeweilige Kraft (ermittelt aus jeweiligem Druck und Kontaktfläche zwischen Stempel und Platte) in Abhängigkeit von der Zeit vom ersten Kontakt des Stempels mit der PMMA-Platte bis kurz nach deren Abfallen registriert (Messbedingungen 23 °C, 50 % relative Feuchte). Die unmittelbar vor dem Versagen der Klebeverbindung zwischen PMMA-Platte und ABS-Rahmen einwirkende Kraft (Maximalkraft $F_{max}$ im Kraft-Zeit-Diagramm in N) wird als Antwort des Push-Out-Tests registriert.

*Klebkraft (Methoden P3: Stahl und P4: Polycarbonat)*

Die Bestimmung der Klebkraft (gemäß AFERA 5001) wird wie folgt durchgeführt. Als definierter Haftgrund wird eine geschliffenen Stahlplatte (rostfreier Stahl 302 nach ASTM A 666; 50 mm × 125 mm × 1,1 mm; glänzende geglühte Oberfläche; Oberflächenrauhigkeit 50 ± 25 nm arithmetische Durchschnittsabweichung von der Basislinie) beziehungsweise ein Polycarbonat eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

*Schlagzähigkeit; z-Richtung (Methode P5)*

Aus dem zu untersuchenden Klebeband wurde eine quadratische, rahmenförmige Probe ausgeschnitten (Außenmaße 33 mm × 33 mm; Stegbreite 2,0 mm; Innenmaße (Fensterausschnitt) 29 mm × 29 mm). Diese Probe wurde auf einen PC-Rahmen (Außenmaße 45 mm × 45 mm; Stegbreite 10 mm; Innenmaße (Fensterausschnitt) 25 mm × 25 mm; Dicke 3 mm) geklebt. Auf der anderen Seite des doppelseitigen Klebebands wurde ein PC-Fenster von 35 mm × 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war und das PC-Fenster sich unterhalb des Rahmens befand. Die Probenhalterung wurde anschließend in die vorgesehene Aufnahme des "DuPont Impact Tester" zentrisch eingesetzt. Der 190 g schwere Schlagkopf wurde so eingesetzt, dass die kreisförmige Aufschlaggeometrie mit dem Durchmesser von 20mm auf die Fensterseite des PC Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht bis die eingebrachte Stoßenergie die Probe durch die Schlagbelastung zerstört und das PC Fenster sich vom PC Rahmen löste.

Um Versuche mit unterschiedlichen Proben vergleichen zu können, wurde die Energie wie folgt berechnet:

$$E\,[J] = \text{Höhe}\,[m] * \text{Masse Gewicht}\,[kg] * 9{,}81\,m/s^2$$

Es wurden fünf Proben pro Produkt getestet und der Energiemittelwert als Kennzahl für die Schlagzähigkeit angegeben.

*Repulsions-Beständigkeits-Test (Anti Repulsion Test) (Methode P6)*

Die offene Seite des zu untersuchenden doppelseitigen Klebebandes wurde mit Hilfe einer Gummirolle auf eine 0,5 mm dicke Aluminiumplatte (Außenmaße 150 mm x 20 mm) verklebt. Die abgedeckte Seite wurde auf eine 3 mm dicke (Außenmaße 200 mm x 25 mm) PC Platte mittig aufgebracht. Die Verklebungsfläche betrug 3000 $mm^2$. Im Anschluss wurde der Klebeverbund aus PC Platte Klebeband und Aluminium Platte mit einer 4 kg Handrolle durch fünfmaliges hin- und her rollen gepresst und für 72 Stunden konditioniert bei 23 °C / 50 % relativer Feuchte gelagert.

Unmittelbar nach der Lagerung wurde der Klebeverbund mit den überstehenden Kanten der PC-Platte derart in eine kreisbogenförmige Probenhalterung mit einem Öffnungswinkel von 33° gespannt, dass der Verbund zentrisch und mit der Aluminium Platte nach oben in der Probenhalterung ausgerichtet war. Die PC Platte berührte dabei vollständig die Probenhalterung, so dass auch der Verbund einer Biegung um den Öffnungswinkel ausgesetzt war.

Der so angeordnete Verbund aus Probenhalterung und Klebeverbund wurde in einem Heizofen bei einer Temperatur von 50°C für 48 Stunden gelagert.

Direkt nach der Lagerung wurden mit einem Stahllinear an den Enden der Längsseiten des Klebeverbundes die Abhebungen der Verklebung zwischen Klebeband und PC Platte oder Klebeband und Aluminium Platte lotrecht gemessen.

Um Versuche mit unterschiedlichen Proben vergleichen zu können, wurde die Abhebung für eine Probe berechnet, indem der Mittelwert aus der Abhebung beider Seite gebildet wurde.

Abhebung Probe [mm] = (Abhebung links [mm] + Abhebung rechts [mm]) / 2

Es wurden drei Proben pro Produkt getestet und der Mittelwert der Abhebung Probe als Kennzahl für die Repulsionsbeständigkeit des Produktes angegeben. Je geringer die Abhebung, desto besser die Verklebungssicherheit mit dem getesteten Klebeprodukt.

## Ergebnisse

Die Ergebnisse aus den Prüfungen sind für die einzelnen Beispiele in der folgenden Tabelle 4 dargestellt:

| | Gesamtdicke (vgl. Tabelle 3) | Dichte kg/m$^3$ | Push Out (N) | Ball Drop (J) | Schlagzähigkeit (z-Richtung) (J) | Klebkraft Stahl (N/cm) | Klebkraft Polycarbonat (N/cm) | Repulsion-Beständigkeit (mm) |
|---|---|---|---|---|---|---|---|---|
| Testmethode | | R4 | P2 | P1 | P5 | P3 | P4 | P6 |
| Beispiel 1 | 150 µm | 652 | 108 | 0,53 | 0,57 | | | |
| Beispiel 2 | 300 µm | 650 | 138 | 0,80 | 0,93 | 14,7 | | |
| Beispiel 3 | 150 µm | 857 | 142 | 0,46 | 1,09 | 12,4 | | |
| Beispiel 4 | 150 µm | 695 | 91 | 0,53 | 0,72 | | | |
| Beispiel 5 | 300 µm | 705 | 66 | 0,46 | 0,54 | | | |
| Beispiel 6 | 150 µm | 855 | 96 | 0,46 | 0,87 | | | |
| Beispiel 7 | 110 µm | 880 | 113 | 0,04 | 0,68 | | | |
| Beispiel 8 | 110 µm | 775 | 88 | 0,08 | 0,49 | | | |
| Beispiel 9 | 110 µm | 695 | 77 | 0,14 | 0,46 | | | |

| | Gesamtdicke (vgl. Tabelle 3) | Dichte kg/m³ | Push Out (N) | Ball Drop (J) | Schlagzähigkeit (z-Richtung) (J) | Klebkraft Stahl (N/cm) | Klebkraft Polycarbonat (N/cm) | Repulsion-Beständigkeit (mm) |
|---|---|---|---|---|---|---|---|---|
| Testmethode | | R4 | P2 | P1 | P5 | P3 | P4 | P6 |
| Beispiel 10 | 110 µm | 570 | 60 | 0,21 | 0,35 | | | |
| Beispiel 11 | 300 µm | 665 | 138 | 0,72 | 0,76 | 10,1 | | |
| Beispiel 12 | 150 µm | 675 | 128 | 0,53 | 0,63 | 11,3 | | |
| Beispiel 13 | 150 µm | 840 | 143 | 0,46 | 0,96 | 10,1 | | |
| Beispiel 14 | 300 µm | 670 | 104 | 0,66 | 0,68 | | | |
| Beispiel 15 | 150 µm | 700 | 70 | 0,46 | 0,51 | | | |
| Beispiel 16 | 150 µm | 845 | 101 | 0,66 | 0,85 | | | |
| Beispiel 17 | 150 µm | 790 | 129 | 0,59 | 0,79 | 9,8 | 10,1 | 36 |
| Beispiel 18 | 300 µm | 793 | 126 | 0,80 | 0,97 | 14,5 | 15,7 | 15 |
| Beispiel 19 | 150 µm | 805 | 138 | 0,59 | 0,74 | 10,6 | 10,2 | 10 |
| Beispiel 20 | 300 µm | 790 | 129 | 0,78 | 0,94 | 12,5 | 13,6 | 4 |
| Beispiel 21 | 100 µm | | | | 0,47 | | | |
| Beispiel 22 | 100 µm | | | | 0,49 | | | |
| Beispiel 23 | 100 µm | | | | 0,43 | | | |
| Beispiel 24 | 100 µm | | | | 0,34 | | | |
| Beispiel 25 | 100 µm | | | | 0,28 | | | |
| Beispiel 26 | 100 µm | | | | 0,32 | | | |
| Beispiel 27 | 100 µm | | | | 0,14 | | | |
| Beispiel 28 | 100 µm | | | | 0,18 | | | |
| Vergleichsbeispiel 1 | 150 µm | 650 | 180 | 0,40 | 0,37 | 11,4 | 10,4 | |
| Vergleichsbeispiel 2 | 300 µm | 665 | 164 | 0,46 | 0,51 | 11,2 | 11,2 | |
| Vergleichsbeispiel 3 | 100 µm | | | | 0,10 | | | |
| Vergleichsbeispiel 4 | 100 µm | 990 | 190 | 0,03 | 0,22 | 17 | | |
| Vergleichsbeispiel 5 | 110 µm | 999 | 186 | 0,03 | 0,24 | | | |

*Tabelle 4 (Fortsetzung)*

Eine Zielanwendung zur Charakterisierung der erfindungsgemäß gestellten Anforderungen wird durch den Schlagzähigkeitstest (Methode P5) repräsentiert. Hier zeigen sich für die erfindungsgemäßen Beispiele durchweg gute Ergebnisse, die denen der nichtgeschäumten Vergleichsbeispiele (Vergleichsbeispiele 3 und 4) - bei jeweils entsprechenden Produktdicken - überlegen sind.

Weiterhin zeigt sich, dass die Schlagzähigkeitsergebnisse der Dreischichtprodukte hinsichtlich vergleichbar dicker Vierschichtprodukte (Vergleichsbeispiele 1 und 2) überlegen sind.

Im Repulsionsbeständigkeits-Test (Methode P6) zeigt sich ein nochmaliger Vorteil der Klebeprodukte, die mit der speziellen Ausführungsform der erfindungsgemäßen Klebemasse (Haftklebemasse 2 mit koordinativer und kovalenter - also dualer - Vernetzung) hergestellt wurden, gegenüber denen mit nicht dual vernetzten Polyacrylat-Klebemassenschichten, so dass die dual vernetzten Klebeprodukte insbesondere da vorteilhaft sind, wo es auf die Repulsionseigenschaften des Klebeproduktes ankommt. Siehe hierzu die Beispiele 17, 18 im Vergleich zu den Beispielen 19, 20; wobei die Beispiele 17 und 19 beziehungsweise 18 und 20 jeweils gleich dick sind.

Nicht dual vernetzte Produkte weisen jedoch in Hinblick auf die übrigen Paramater ebenfalls hervorragende Werte auf.

Aus den Ergebnissen lässt sich weiterhin der Trend entnehmen, dass der optimale Anteil an Mikroballons in der Haftklebemasse im Bereich zwischen 0,5 und 3 liegt (vergleiche hierzu beispielweise die Beispiele 7 bis 10 sowie Vergleichsbeispiel 5 mit derselben Dicke und auf derselben Basisklebemasse basierend).

Aus einem Vergleich der Beispiele 21 bis 24 (Haftklebemasse 1 auf Basis eines Blends aus Acrylatpolymeren und Kautschuk ) mit den Beisspielen 25 bis 28 (harzabgemischte Haftklebemasse 4; harzabgemischte Acrylatklebemasse) lässt sich entnehmen, dass die Blendmasse höhere Schlagzähigkeitswerte aufweist und somit der Reinacrylatmasse überlegen ist.

Aus den jeweiligen Messreihen (Variation der Anteile der Mikroballons in den jeweiligen Beispielen 21 bis 24 und Vergleichsbeispiel 4) beziehungsweise Beispielen 25 bis 28 und Vergleichsbeispiel 3) bestätigt sich der oben bereits ermittelte optimale Gehalt an Mikroballons in den jeweiligen Haftklebemassen.

## Patentansprüche

**1.** Haftklebestreifen aus drei Schichten, umfassend

- eine innenliegende Schicht F aus einem Folienträger,
- eine Schicht SK1 aus einer selbstklebenden Masse, die auf einer der Oberflächen der Folienträgerschicht F angeordnet ist und die auf einer geschäumten Acrylatmasse basiert,
- eine Schicht SK2 aus einer selbstklebenden Masse, die auf der der Schicht SK1 gegenüberliegenden Oberfläche der Folienträgerschicht F angeordnet ist und die auf einer geschäumten Acrylatmasse basiert

**dadurch gekennzeichnet, dass**

zur Schäumung der Polymermatrix der Selbstklebemassenschichten SK1 und SK2 Mikroballons verwendet werden und
der Anteil der Mikroballons beider Selbstklebemassenschichten SK1 und SK2 (bezogen auf die nicht expandierten Mikroballons) zwischen 0,5 und 3 Gew.-% liegt, jeweils bezogen auf die Gesamtzusammensetzung der entsprechenden Schicht SK1 beziehungsweise SK2.

**2.** Haftklebestreifen nach Anspruch 1, **dadurch gekennzeichnet, dass** der Folienträger nichtdehnbar ist.

**3.** Haftklebestreifen nach einem der Ansprüche 1 oder 2, **dadurch gekennzeichnet, dass** der Folienträger eine Zugfestigkeit von jeweils mehr als 100 $N/mm^2$, vorzugsweise von größer 150 $N/mm^2$, in Längs- und in Querrichtung aufweist, sehr bevorzugt von größer 180 $N/mm^2$ in Längsrichtung und größer 200 $N/mm^2$ in Querrichtung.

**4.** Haftklebestreifen nach einem der vorangehenden Ansprüche, **gekennzeichnet durch** einen in Bezug auf die Zusammensetzung der Schichten symmetrischen Aufbau, indem die geschäumten selbstklebenden Acrylatmassen der beiden Selbstklebemasseschichten SK1 und SK2 chemisch identisch sind.

**5.** Haftklebestreifen nach einem der vorangehenden Ansprüche, **gekennzeichnet durch** einen strukturell symmetrischen Aufbau, indem die beiden Selbstklebemasseschichten SK1 und SK2 gleich dick sind und/oder dieselbe Dichte aufweisen.

**6.** Haftklebestreifen nach einem der vorangehenden Ansprüche, **dadurch gekennzeichnet, dass**
eine oder beide Oberflächen der Folienträgerschicht F physikalisch und/oder chemisch vorbehandelt sind.

**7.** Haftklebestreifen nach Anspruch 5, **dadurch gekennzeichnet, dass** die Vorbehandlung eine Ätzung und/oder eine Coronabehandlung und/oder eine Primerung ist.

8. Haftklebestreifen nach einem der vorangehenden Ansprüche,
**dadurch gekennzeichnet, dass**
zur Bildung der Acrylatmasse zumindest einer, bevorzugt beider Selbstklebemassenschichten SK1 und SK2 ein Polyacrylat eingesetzt wird, das auf die folgende Monomerzusammensetzung zurückgeführt werden kann:

(i) Acrylsäureester und/oder Methacrylsäureester der folgenden Formel

$$CH_2=C(R^1)(COOR^2)$$

wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
(ii) optional olefinisch ungesättigte Comonomere mit funktionellen Gruppen der für eine Reaktivität mit Epoxidgruppen bereits definierten Art,
(iii) optional weitere Acrylate und/oder Methacrylate und/oder olefinisch ungesättigte Monomere, die mit der Komponente (i) copolymerisierbar sind.

9. Haftklebestreifen nach einem der vorhergehenden Ansprüche,
**dadurch gekennzeichnet, dass**
die Haftklebemassen für zumindest eine, bevorzugt für beide Selbstklebemassenschichten SK1 und SK2 zumindest die folgenden beiden Komponenten umfassen:

(P) eine erste Polymerkomponente auf Polyacrylatbasis,
(E) eine zweite, mit der Polyacrylatkomponente im Wesentlichen nicht mischbare Polymerkomponente auf Elastomerbasis,

10. Haftklebestreifen nach Anspruch 9, **dadurch gekennzeichnet, dass**

die Polymerkomponente (P) auf Polyacrylatbasis einen Anteil von 60 Gew.-% bis 90 Gew.-%, bevorzugt 65 Gew.-% bis 80 Gew.-%,
und die Polymerkomponente (E) auf Elastomerbasis einen Anteil von 10 Gew.-% bis 40 Gew.-%, bevorzugt 15 Gew.-% bis 30 Gew.-%,
an der Gesamtheit (100 %) aus den beiden Komponenten (P) und (E) haben.

11. Haftklebestreifen nach einem der Ansprüche 9 oder 10, **dadurch gekennzeichnet, dass** die Polymerkomponente (E) auf Elastomerbasis durch einen oder mehrere Synthesekautschuke gebildet wird oder einen oder mehrere Synthesekautschuke umfasst.

12. Haftklebestreifen nach einem der vorhergehenden Ansprüche,
**dadurch gekennzeichnet, dass**
der Haftklebemassen für zumindest eine, bevorzugt für beide Selbstklebemassenschichten SK1 und SK2 Vernetzer beigemischt sind.

13. Haftklebestreifen nach einem der vorhergehenden Ansprüche,
**dadurch gekennzeichnet, dass**
die Klebemasse für zumindest eine, bevorzugt für beide Selbstklebemassenschichten SK1 und SK2 eine vernetzbare Klebemasse ist, die insbesondere besteht aus

(a) zumindest einer ersten Basiskomponente mit
(a1) als erster Polymerkomponente eine Basispolymerkomponente (im Folgenden auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren,
wobei zumindest eines der Homopolymere oder zumindest eines der Copolymere, insbesondere alle der Polymere der Basispolymerkomponente für die Vernetzung funktionelle Gruppen aufweisen,
(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;
(b) optional einer zweiten Komponente mit
(b1) als weitere Polymerkomponente mit dem Basispolymer im Wesentlichen nicht homogen mischbare Polymere, insbesondere solche ohne vernetzungsfähige Gruppen,
(b2) gegebenenfalls weitere mit dem Basispolymer im Wesentlichen nicht homogen mischbare und in diesem nicht lösliche Bestandteile, wie bestimmte Harze oder Additive, wobei die Komponente (f) insbesondere ganz oder teilweise mit der optional vorhandenen weiteren Polymerkomponente (b) homogen mischbar ist;
(c) Vernetzern, nämlich
(c1) zumindest einen kovalenten Vernetzer,
(c2) zumindest einen koordinativen Vernetzer,
und
(d) gegebenenfalls Lösemittel oder Lösemittelreste.

**14.** Haftklebestreifen nach einem der vorhergehenden Ansprüche,
**dadurch gekennzeichnet, dass**
den Haftklebemassen zumindest einer, bevorzugt beider Selbstklebemassenschichten SK1 und SK2 15 bis 100 Gewichtsteile Klebrigmacher auf 100 Gewichtsteile Klebmasse ohne Klebrigmacher hinzugefügt sind, bevorzugt 20 bis 80 Gewichtsteile, weiter bevorzugt 30 bis 50 Gewichtsteile.

**15.** Haftklebestreifen nach einem der vorhergehenden Ansprüche,
**dadurch gekennzeichnet, dass**
es sich bei den Klebrigmachern um Klebharze handelt, insbesondere solchen Klebharzen, die zu mindestens 75 Gew.% Kohlenwasserstoffharze oder Terpenharze oder eine Mischung hieraus umfassen.

**16.** Haftklebestreifen nach einem der vorangehenden Ansprüche, **dadurch gekennzeichnet, dass**
nach Schäumung mindestens 90 % aller von Mikroballons gebildeten Hohlräume in der Schicht SK1 oder der Schicht SK2 oder bevorzugt beider Schickten SK1 und SK2 einen maximalen Durchmesser von 7 bis 200 μm, stärker bevorzugt von 10 bis 100 μm, ganz besonders bevorzugt von 10 bis 30 μm aufweisen.

**17.** Haftklebestreifen nach einem der Ansprüche 9 bis 16, **dadurch gekennzeichnet, dass**

die Elastomerkomponente in der Polyacrylatkomponente Domänen ausbildet, wobei
der maximale Durchmesser von mindestens 90 % der Domänen der Elastomerkomponente im Größenbereich unterhalb von 100 μm liegt, und der maximale Durchmesser der von mindestens 90 % aller von Mikroballons gebildeten Hohlräume ebenfalls unterhalb von 100 μm liegt, insbesondere jeweils im Bereich zwischen 10 μm und 30 μm .

**18.** Haftklebestreifen nach zumindest einem der Ansprüche 16 oder 17,
**dadurch gekennzeichnet, dass**
nicht oder nur wenig vorexpandierte Mikroballons in die Polymermatrix der Selbstklebemassenschichten SK1 und/oder SK2 eingearbeitet werden, die erst nach dem Einarbeiten expandiert werden.

**19.** Haftklebestreifen nach zumindest einem der Ansprüche 16 bis 18,
**dadurch gekennzeichnet, dass**
die Mikroballons für die Schäumung der Klebmassenschichten SK1 und/oder SK2 so gewählt werden, dass das Verhältnis der Dichte der Polymermatrix der entsprechenden Klebmassenschichten zu der Dichte der in die Polymermatrix der jeweiligen Schicht einzuarbeitenden (nicht oder nur wenig vorexpandierten) Mikroballons selbst zwischen 1 und 1:6 liegt.

**20.** Verwendung eines Haftklebestreifens nach zumindest einem der vorhergehenden Ansprüche zur Verklebung von Bauteilen wie insbesondere Akkus und elektronischen Geräten wie insbesondere Handys.

**Claims**

**1.** Pressure-sensitive adhesive strip composed of three layers, comprising

• an inner layer F composed of a film carrier,

• a layer SK1 composed of a self-adhesive composition arranged on one of the surfaces of the film carrier layer F and based on a foamed acrylate composition,
• a layer SK2 composed of a self-adhesive composition arranged on the opposite surface of the film carrier layer F from layer SK1 and based on a foamed acrylate composition,

**characterized in that**
the polymer matrix of the self-adhesive composition layers SK1 and SK2 is foamed using microballoons and the proportion of the microballoons in the two self-adhesive composition layers SK1 and SK2 (based on the unexpanded microballoons) is between 0.5% and 3% by weight, based in each case on the overall composition of the corresponding layer SK1 or SK2.

**2.** Pressure-sensitive adhesive strip according to Claim 1, **characterized in that**
the film carrier is nonextensible.

**3.** Pressure-sensitive adhesive strip according to either of Claims 1 and 2, **characterized in that** the film carrier has a tensile strength of in each case more than 100 $N/mm^2$, preferably of greater than 150 $N/mm^2$, in longitudinal direction and in transverse direction, very preferably of greater than 180 $N/mm^2$ in longitudinal direction and greater than 200 $N/mm^2$ in transverse direction.

**4.** Pressure-sensitive adhesive according to any of the preceding claims, **characterized by** a symmetric construction in relation to the composition of the layers, in that the foamed self-adhesive acrylate compositions of the two self-adhesive composition layers SK1 and SK2 are chemically identical.

**5.** Pressure-sensitive adhesive according to any of the preceding claims, **characterized by** a structurally symmetric construction, in that the two self-adhesive composition layers SK1 and SK2 are of the same thickness and/or have the same density.

**6.** Pressure-sensitive adhesive strip according to any of the preceding claims, **characterized in that** one or both surfaces of the film carrier layer F have been physically and/or chemically pretreated.

**7.** Pressure-sensitive adhesive strip according to Claim 5, **characterized in that**
the pretreatment is an etching operation and/or a corona treatment and/or a primer treatment.

**8.** Pressure-sensitive adhesive strip according to any of the preceding claims,
**characterized in that**
the acrylate composition for at least one and preferably both of the self-adhesive composition layers SK1 and SK2 is formed using a polyacrylate that can be derived from the following monomer composition:

(i) acrylic esters and/or methacrylic esters of the following formula:

$$CH_2=C(R^1)(COOR^2)$$

where $R^1$ = H or $CH_3$ and $R^2$ = H or linear, branched or cyclic, saturated or unsaturated alkyl radicals having 1 to 30 and especially having 4 to 18 carbon atoms,
(ii) optionally olefinically unsaturated comonomers having functional groups of the type already defined for reactivity with epoxy groups,
(iii) optionally further acrylates and/or methacrylates and/or olefinically unsaturated monomers copolymerizable with component (i).

**9.** Pressure-sensitive adhesive strip according to any of the preceding claims,
**characterized in that**
the pressure-sensitive adhesive compositions for at least one and preferably both of the self-adhesive composition layers SK1 and SK2 comprise at least the following two components:

(P) a first, polyacrylate-based polymer component,
(E) a second, elastomer-based polymer component which is essentially immiscible with the polyacrylate component.

**10.** Pressure-sensitive adhesive strip according to Claim 9, **characterized in that**

the polyacrylate-based polymer component (P) has a proportion of 60% by weight to 90% by weight, preferably 65% by weight to 80% by weight,
and the elastomer-based polymer component (E) has a proportion of 10% by weight to 40% by weight, preferably 15% by weight to 30% by weight,
in the entirety (100%) of the two components (P) and (E) .

**11.** Pressure-sensitive adhesive strip according to either of Claims 9 and 10, **characterized in that** the elastomer-based polymer component (E) is formed by one or more synthetic rubbers or comprises one or more synthetic rubbers.

**12.** Pressure-sensitive adhesive strip according to any of the preceding claims,
**characterized in that**
the pressure-sensitive adhesive compositions for at least one and preferably both of the self-adhesive composition layers SK1 and SK2 have been admixed with crosslinkers.

**13.** Pressure-sensitive adhesive strip according to any of the preceding claims,
**characterized in that**
the adhesive composition for at least one and preferably both of the self-adhesive composition layers SK1 and SK2 is a crosslinkable adhesive composition especially consisting of

(a) at least one first base component comprising
(a1) as the first polymer component a base polymer component (also referred to hereinafter as base polymer for short) composed of a homopolymer, a copolymer or a homogeneous mixture of two or more homopolymers, two or more copolymers or one or more homopolymers with one or more copolymers,
where at least one of the homopolymers or at least one of the copolymers, especially all the polymers, in the base polymer component have groups that are functional in respect of the crosslinking,
(a2) optionally further constituents that are homogeneously miscible with or soluble in the base polymer component, such as resins or additives, monomer residues, short-chain polymerization products (by-products), impurities etc.;
(b) optionally a second component comprising
(b1) as a further polymer component polymers that are essentially not homogeneously miscible with the base polymer, especially those having no crosslinkable groups,
(b2) optionally further constituents that are essentially not homogeneously miscible with and insoluble in the base polymer, such as particular resins or additives, where component (f) is especially wholly or partly homogeneously miscible with the further polymer component (b) optionally present;
(c) crosslinkers, namely
(c1) at least one covalent crosslinker,
(c2) at least one coordinative crosslinker,
and
(d) optionally solvents or solvent residues.

**14.** Pressure-sensitive adhesive strip according to any of the preceding claims,
**characterized in that**
15 to 100 parts by weight of tackifier per 100 parts by weight of adhesive composition without tackifier have been added to the pressure-sensitive adhesive compositions for at least one and preferably both of the self-adhesive composition layers SK1 and SK2, preferably 20 to 80 parts by weight, more preferably 30 to 50 parts by weight.

**15.** Pressure-sensitive adhesive strip according to any of the preceding claims,
**characterized in that**
the tackifiers are tackifying resins, especially those tackifying resins that comprise, to an extent of at least 75% by weight, hydrocarbon resins or terpene resins or a mixture thereof.

**16.** Pressure-sensitive adhesive strip according to any of the preceding claims, **characterized in that**
after foaming, at least 90% of all voids formed by microballoons in layer SK1 or layer SK2 or preferably in both layers SK1 and SK2 have a maximum diameter of 7 to 200 μm, more preferably of 10 to 100 μm, most preferably of 10 to 30 μm.

**17.** Pressure-sensitive adhesive strip according to any of Claims 9 to 16, **characterized in that**
the elastomer component in the polyacrylate component forms domains, where the maximum diameter of at least 90% of the domains of the elastomer component is within the size range below 100 µm, and the maximum diameter of the voids formed by at least 90% of all microballoons is likewise below 100 µm, especially in each case in the range between 10 µm and 30 µm.

**18.** Pressure-sensitive adhesive strip according to at least one of Claims 16 and 17,
**characterized in that**
microballoons that have been pre-expanded only slightly, if at all, are incorporated into the polymer matrix of the self-adhesive composition layers SK1 and/or SK2 and are expanded only after having been incorporated.

**19.** Pressure-sensitive adhesive strip according to at least one of Claims 16 to 18,
**characterized in that**
the microballoons for the foaming of the self-adhesive composition layers SK1 and/or SK2 are chosen such that the ratio of the density of the polymer matrix of the corresponding adhesive composition layers to the density of the (non-pre-expanded or only slightly pre-expanded) microballoons to be incorporated into the polymer matrix of the respective layer itself is between 1 and 1:6.

**20.** Use of a pressure-sensitive adhesive strip according to at least one of the preceding claims for bonding of components such as, in particular, accumulators and electronic devices such as, in particular, cellphones.

## Revendications

**1.** Bande adhésive constituée par trois couches, comprenant

- une couche interne F constituée par un support en feuille
- une couche SK1 constituée par une masse autoadhésive qui est agencée sur l'une des surfaces de la couche support en feuille F et qui est à base d'une masse moussée d'acrylate,
- une couche SK2 constituée par une masse autoadhésive qui est agencée sur la surface opposée à la couche SK1 de la couche support en feuille F et qui est à base d'une masse moussée d'acrylate,

**caractérisée en ce que**, pour le moussage de la matrice polymère des couches de masse autoadhésive SK1 et SK2, des microballons sont utilisés et la proportion des microballons des deux couches de masse autoadhésive SK1 et SK2 (par rapport aux microballons non expansés) est située entre 0,5 et 3% en poids, à chaque fois par rapport à la composition totale de la couche SK1 ou, selon le cas, SK2 correspondante.

**2.** Bande adhésive selon la revendication 1, **caractérisée en ce que** le support en feuille n'est pas extensible.

**3.** Bande adhésive selon l'une quelconque des revendications 1 ou 2, **caractérisée en ce que** le support en feuille présente une résistance à la traction à chaque fois supérieure à 100 N/mm$^2$, de préférence supérieure à 150 N/mm$^2$, dans la direction longitudinale et transversale, très préférablement supérieure à 180 N/mm$^2$ dans la direction longitudinale et supérieure à 200 N/mm$^2$ dans la direction transversale.

**4.** Bande adhésive selon l'une quelconque des revendications précédentes, **caractérisée par** une structure symétrique en ce qui concerne la composition des couches en ce que les masses moussées autoadhésives d'acrylate des deux couches de masse autoadhésive SK1 et SK2 sont chimiquement identiques.

**5.** Bande adhésive selon l'une quelconque des revendications précédentes, **caractérisée par** une structure structuralement symétrique en ce que les deux couches de masse autoadhésive SK1 et SK2 présentent la même épaisseur et/ou la même densité.

**6.** Bande adhésive selon l'une quelconque des revendications précédentes, **caractérisée en ce qu'**une ou les deux surfaces de la couche support en feuille F est/sont physiquement ou chimiquement prétraitée (s) .

**7.** Bande adhésive selon la revendication 5, **caractérisée en ce que** le prétraitement est un décapage et/ou un traitement corona et/ou l'application d'un apprêt.

**8.** Bande adhésive selon l'une quelconque des revendications précédentes, **caractérisée en ce que**, pour la formation de la masse d'acrylate d'au moins l'une des couches de masse autoadhésive SK1 et SK2, de préférence les deux, un polyacrylate est utilisé qui peut être attribué à la composition monomère suivante :

(i) des esters de l'acide acrylique et/ou de l'acide méthacrylique de la formule suivante

$$CH_2=C(R^1)(COOR^2)$$

dans laquelle $R^1$ = H ou $CH_3$ et $R^2$ = H ou un radical alkyle linéaire, ramifié ou cyclique, saturé ou insaturé, comprenant 1 à 30, en particulier 4 à 18 atomes de carbone,
(ii) éventuellement des comonomères oléfiniquement insaturés présentant des groupes fonctionnels du type déjà défini pour une réactivité avec des groupes époxyde,
(iii) éventuellement d'autres acrylates et/ou méthacrylates et/ou monomères oléfiniquement insaturés qui sont copolymérisables avec le composant (i) .

**9.** Bande adhésive selon l'une quelconque des revendications précédentes, **caractérisée en ce que** les masses adhésives pour au moins l'une des masses autoadhésives SK1 et SK2, de préférence pour les deux, comprennent au moins les deux composants suivants :

(P) un premier composant polymère à base de polyacrylate,
(E) un deuxième composant polymère à base d'élastomère, sensiblement non miscible avec le composant polyacrylate.

**10.** Bande adhésive selon la revendication 9, **caractérisée en ce que** le composant polymère (P) à base de polyacrylate représente une proportion de 60% en poids à 90% en poids, de préférence de 65% en poids à 80% en poids, et le composant polymère (E) à base d'élastomère représente une proportion de 10% en poids à 40% en poids, de préférence de 15% en poids à 30% en poids, par rapport à la totalité (100%) des deux composants (P) et (E).

**11.** Bande adhésive selon l'une quelconque des revendications 9 ou 10, **caractérisée en ce que** le composant polymère (E) à base d'élastomère est formé par un ou plusieurs caoutchoucs de synthèse ou comprend un ou plusieurs caoutchoucs de synthèse.

**12.** Bande adhésive selon l'une quelconque des revendications précédentes, **caractérisée en ce qu'**un réticulant est de préférence mélangé dans les masses adhésives pour au moins l'une des masses autoadhésive SK1 et SK2, de préférence pour les deux.

**13.** Bande adhésive selon l'une quelconque des revendications précédentes, **caractérisée en ce que** la masse adhésive pour au moins l'une des masses autoadhésives SK1 et SK2, de préférence pour les deux, est une masse adhésive réticulable qui est en particulier constituée par

(a) au moins un premier composant de base présentant

(a1) comme premier composant polymère, un composant polymère de base (également désigné par polymère de base en abrégé dans la suite) constitué par un homopolymère, un copolymère ou un mélange homogène de plusieurs homopolymères, de plusieurs copolymères ou d'un ou de plusieurs homopolymères avec un ou plusieurs copolymères,
au moins l'un des homopolymères ou au moins l'un des copolymères, en particulier tous les polymères du composant polymère de base présentant des groupes fonctionnels pour la réticulation,
(a2) le cas échéant d'autres constituants miscibles de manière homogène avec le composant polymère de base ou solubles dans celui-ci, tels que des résines ou des additifs, des résidus monomères, des produits de polymérisation à courte chaîne (produits secondaires), des impuretés, etc. ;

(b) éventuellement un deuxième composant présentant

(b1) comme autres composants polymères, des polymères sensiblement non miscibles de manière homogène avec le polymère de base, en particulier ceux sans groupes aptes à la réticulation,
(b2) le cas échéant d'autres constituants sensiblement non miscibles de manière homogène avec le polymère de base et insolubles dans celui-ci, tels que certaines résines ou certains additifs, le composant (f) étant en particulier miscible de manière homogène, totalement ou partiellement, avec l'autre composant polymère (b) éventuellement présent ;

(c) des réticulants, à savoir

(c1) au moins un réticulant covalent,
(c2) au moins un réticulant coordinant et

(d) le cas échéant des solvants ou des résidus de solvant.

**14.** Bande adhésive selon l'une quelconque des revendications précédentes, **caractérisée en ce que** les masses adhésives d'au moins l'une des couches de masse autoadhésive SK1 et SK2, de préférence des deux, sont additionnées de 15 à 100 parties en poids d'agent poisseux par rapport à 100 parties en poids de masse adhésive sans agent poisseux, de préférence de 20 à 80 parties en poids, plus préférablement de 30 à 50 parties en poids.

**15.** Bande adhésive selon l'une quelconque des revendications précédentes, **caractérisée en ce qu'**il s'agit, pour les agents poisseux, de résines adhésives, en particulier de résines adhésives qui comprennent à raison d'au moins 75% en poids de résines hydrocarbonées ou de résines terpéniques ou d'un mélange de celles-ci.

**16.** Bande adhésive selon l'une quelconque des revendications précédentes, **caractérisée en ce que** les espaces creux formés après le moussage d'au moins 90% de tous les microballons dans la couche SK1 ou la couche SK2 ou de préférence dans les deux couches SK1 et SK2 présentent un diamètre maximal de 7 à 200 µm, plus préférablement de 10 à 100 µm, de manière tout particulièrement préférée de 10 à 30 µm.

**17.** Bande adhésive selon l'une quelconque des revendications 9 à 16, **caractérisée en ce que** le composant élastomère dans le composant de polyacrylate forme des domaines, le diamètre maximal d'au moins 90% des domaines du composant élastomère se situant dans la plage des dimensions inférieures à 100 µm et le diamètre maximal des espaces creux formés par au moins 90% de tous les microballons étant également inférieur à 100 µm, en particulier à chaque fois dans la plage entre 10 µm et 30 µm.

**18.** Bande adhésive selon au moins l'une quelconque des revendications 16 ou 17, **caractérisée en ce que** des microballons non pré-expansés ou seulement peu pré-expansés sont incorporés dans la matrice polymère des couches de masse autoadhésive SK1 et/ou SK2, qui ne sont expansés qu'après l'incorporation.

**19.** Bande adhésive selon au moins l'une quelconque des revendications 16 à 18, **caractérisée en ce que** les microballons pour le moussage des couches de masse adhésives SK1 et/ou SK2 sont choisis de manière telle que le rapport de la densité de la matrice polymère des couches de masse adhésive correspondantes à la densité des microballons (non pré-expansés ou seulement peu pré-expansés) eux-mêmes à incorporer dans la matrice polymère de chaque couche est situé entre 1 et 1:6.

**20.** Utilisation d'une bande adhésive selon au moins l'une quelconque des revendications précédentes pour le collage de composants, tels qu'en particulier des accumulateurs, et d'appareils électroniques, tels qu'en particulier les téléphones portables.

4
2
1
3
5

Fig. 1

10 µm
Primary Mag = 1.00 K X
Image Pixel Size = 293.0 nm
EHT = 5.00 kV
WD = 5.7 mm
Signal A = InLens
Signal B = SE2
Signal = 0.5263
Mixing = Off
Filename:
Date :24 Mar 2015
15032412.tif

Fig. 2

20 µm
Primary Mag = 500 X
Image Pixel Size = 617.2 nm
EHT = 5.00 kV
WD = 5.3 mm
Signal A = InLens
Signal B = SE2
Signal = 0.3882
Mixing = Off
Filename:
ELMIG
Date :20 Nov 2015
151120_15.tif

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102016202479
- DE 4313008 A1


### In der Beschreibung aufgeführte Nicht-Patentliteratur


- **T.G. FOX.** *Bull. Am. Phys. Soc.,* 1956, vol. 1, 123
- *CHEMICAL ABSTRACTS,* 63738-22-7